# EUROPEAN PATENT APPLICATION

(11) **EP 4 759 713 A1**
(43) Date of publication of application: **17.06.2026**
(21) Application number: 25217848.8
(22) Date of filing: 21.11.2025
(51) Int. Cl.: B64D 13/04

(54) **CABIN PRESSURE CONTROL SYSTEM**

(30) Priority: 13.12.2024 US 202418980874
(71) Applicant: Honeywell International Inc., Charlotte, NC 28202 (US)
(72) Inventor: HORNER, Darrell W., Charlotte, 28202 (US)
(74) Representative: Haseltine Lake Kempner LLP

(57) **Abstract**

In some examples, a cabin pressure control system includes a valve system including a valve configured to fluidically couple an internal environment internal to an aircraft and external environment external to the aircraft. The valve system includes a first motor assembly, a second motor assembly, and a manual motor assembly configured to operate the valve. The first motor assembly is configured to receive a first motor command from a first controller, the second motor assembly is configured to receive a second motor command from a second controller, and the manual motor assembly is configured to receive a manual motor command from a manual controller. The system may include a gearbox configured to receive a mechanical power from any of the first motor assembly, the second motor assembly, and the third motor assembly to cause operation of the valve.

## Description

### TECHNICAL FIELD

The disclosure relates to aircraft cabin air pressure control.

### BACKGROUND

Vehicles, such as aircraft, may have a pressurized cabin to provide comfort and sufficient oxygen to a flight crew as well as passengers. In some examples, bleed air from the aircraft engines, or an engine driven air pump, may provide pressure to the aircraft interior. An outflow valve (OFV) may be used to release pressure from inside the cabin to the atmosphere to keep the internal cabin pressure within a desirable range. Some aircraft are equipped with a cabin pressure control system (CPCS) to maintain the cabin pressure altitude to within a relatively comfortable range (e.g., below approximately 8,000 feet). The CPCS may automatically allow gradual changes in the cabin pressure altitude to keep passengers and crew comfortable and maintain a cabin-to-atmosphere differential pressure below nominal and maximum limits.

### SUMMARY

In examples, pressure control system for a compartment of a vehicle, the system comprising: a valve configured to fluidically couple the compartment and an external atmosphere surrounding the vehicle; a first motor assembly configured to operate the valve; a second motor assembly configured to operate the valve; and a manual motor assembly configured to operate the valve, wherein the first motor assembly is configured to receive a first motor command from a first controller to operate the valve, wherein the second motor assembly is configured to receive a second motor command from a second controller to operate the valve, wherein the pressure control system is configured to limit the second motor assembly from operating the valve when the first motor assembly operates the valve, and wherein the pressure control system is configured to limit the first motor assembly from operating the valve and limit the second motor assembly from operating the valve when the manual motor assembly operates the valve; and a sensor configured to provide a signal to the second motor assembly to cause operation of the valve using a backup motor command.

In examples, a pressure control system for a compartment of a vehicle comprises: a first valve assembly including a first valve configured to fluidically couple the compartment and an external atmosphere surrounding the vehicle, a motor assembly MA-1 configured to operate the first valve, a motor assembly MB-1 configured to operate the first valve, and a motor assembly MAN-1 configured to operate the first valve; a second valve assembly including a second valve configured to fluidically couple the compartment and the external atmosphere, a motor assembly MA-2 configured to operate the second valve, a motor assembly MB-2 configured to operate the second valve, and a motor assembly MAN-2 configured to operate the second valve; a first controller configured to issue a first C1 motor command to cause the motor assembly MA-1 to operate the first valve and issue a second C1 motor command to cause the motor assembly MA-2 to operate the second valve; a second controller configured to issue a first C2 motor command to cause the motor assembly MB-1 to operate the first valve and issue a second C2 motor command to cause the motor assembly MB-2 to operate the second valve, wherein the pressure control system is configured to limit receipt of the first C1 motor command by the motor assembly MA-1 and limit receipt of the first C2 motor command by the motor assembly MB-1 when the motor assembly MAN-1 operates the first valve, and wherein the pressure control system is configured to limit receipt of the second C1 motor command by the motor assembly MA-2 and limit receipt of the second C2 motor command by the motor assembly MB-2 when the motor assembly MAN-2 operates the second valve; a first sensor DP1 configured to provide a first signal to the motor assembly MB-1, wherein the first signal is indicative of a first differential pressure between the compartment and the external atmosphere, and wherein the motor assembly MB-1 is configured to, if the first differential pressure exceeds a first threshold: cause operation of the first valve, limit receipt of the first C1 motor command by the motor assembly MA-1, and limit receipt of the first C2 motor command; and a second sensor DP2 configured to provide a second signal to the motor assembly MB-2, wherein the second signal is indicative of a second differential pressure between the compartment and the external atmosphere, and wherein the motor assembly MB-2 is configured to, if the second differential pressure exceeds a second threshold: cause operation of the second valve, limit receipt of the second C1 motor command by the motor assembly MA-2, and limit receipt of the second C2 motor command.

In an example, a method comprises: operating, using a pressure control system, a valve using one of a first motor assembly, a second motor assembly, or a manual motor assembly, wherein the valve is configured to fluidically couple a compartment of a vehicle and an external atmosphere surrounding the vehicle, wherein the first motor assembly is configured to operate the valve when the first motor assembly receives a first motor command from a first controller, wherein the second motor assembly is configured to operate the valve when the second motor assembly receives a second motor command from a second controller; limiting, using the pressure control system, the second motor assembly from operating the valve when the first motor assembly operates the valve and limiting, using the pressure control system, the first motor assembly from operating the valve when the second motor assembly operates the valve; limiting, using the pressure control system, the first motor assembly and the second motor assembly from operating the valve when the manual motor assembly operates the valve; and limiting, using a sensor, use of the first motor command to operate the valve and use of the second motor command to operate the valve when the sensor provides a signal to the second motor assembly, wherein the sensor is configured to provide the signal when a differential pressure between the compartment and the external atmosphere exceeds a threshold

The details of one or more examples are set forth in the accompanying drawings and the description below. Other features, objects, and advantages will be apparent from the description and drawings, and from the claims.

### BRIEF DESCRIPTION OF DRAWINGS

FIG. 1 is a schematic illustration of a portion of a vehicle including a first valve and a second valve configured to control a pressure of an internal environment of a compartment of the vehicle.
FIG. 2 is a schematic illustration of a system including the first valve and the second valve.
FIG. 3 is a schematic illustration of a first motor assembly, a second motor assembly, and a manual motor assembly configured to control the first valve.
FIG. 4 is a flow diagram illustrating an example method of controlling a pressure of the compartment of the vehicle.

### DETAILED DESCRIPTION

Aircraft often fly at altitudes necessitating pressurization of one or more aircraft cabins to simulate conditions at lower altitudes to, for example, facilitate the comfort of passengers and crew during flight. Typically, air is provided via an onboard system (e.g., a compressor side of a turbine engine or another system) and conditioned by an environmental control system (ECS) before being provided to the cabin as a pressurized air flow. An internal pressure of the cabin may be controlled by a cabin pressure control system (CPCS) during flight and/or other operations of the aircraft. For example, at increased altitudes where external environments surrounding the aircraft may be thinner and less able or insufficient to support human life, the CPCS may control the cabin internal pressure to substantially simulate a higher pressure atmospheric condition found at lower altitudes. This enables the aircraft to simulate the conditions of lower altitudes as the aircraft operates at the higher altitudes where the aircraft may be more efficient.

The aircraft may be required to discharge (e.g., vent) air from the relatively higher pressure cabin to the relatively lower pressure external environment (e.g., as the ECS provides air flow to the cabin) in order to maintain the cabin pressure within a desired range during flight operations and/or for other reasons. This air discharge may be driven (e.g., motivated to flow) at least in part by a differential pressure between the cabin and the external environment. This differential pressure is largely dependent on the altitude of the aircraft. For example, when the aircraft operates at higher altitudes, the differential pressure between the cabin and the external environment surrounding the aircraft is generally greater than when the aircraft operates at lower altitudes, due at least in part to the external environment becoming relatively thinner as the altitude increases. The CPCS may be configured to substantially control this air discharge (e.g., using one or more systems and/or aircraft components) based on the differential pressure experienced and/or expected during flight operations of the aircraft.

The CPCS may be configured to control the air discharge by controlling one or more outflow valves which discharge the air flow from the cabin to the external environment. For example, an outflow valve may be in fluidic communication with a conduit or other component and/or system at least partially defining a flow path for a fluid from the cabin to the external environment surrounding the aircraft. In some examples, the outflow valve is configured and/or positioned on the aircraft such that air exhausted from the cabin provides forward thrust to the aircraft. This forward thrust may be in addition to a forward thrust provided by an engine of the aircraft.

Typically, pressurization might be controlled (e.g., by the CPCS) to maintain a cabin pressure corresponding to about 6000 to 8000 feet above sea level. In examples, for example when an aircraft takes off from air fields that are less then 6000 to 8000 feet, the pressurization may be controlled to maintain a cabin pressure that greater than the ambient pressure around the aircraft as it climbs from the takeoff field elevation to altitudes greater than 6000 to 8000 feet. Hence, at aircraft altitudes that are less than 6000 to 8000 feet, and at altitudes in excess of 6000 to 8000 feet, a positive pressure differential is expected to develop between the cabin and the external environment surrounding the aircraft. For example, for an aircraft operating at about 45,000 feet, the pressure differential might be about 10 pounds per square inch differential (PSID), but at airplane altitudes lower than 45,000 feet, the pressure differential pressure may be less than 10 pounds per square inch differential (PSID).

Further, during airplane descent, if the cabin pressurized to a given level that does not always result in a pressure greater than the pressure surrounding the aircraft, the pressure surrounding the airplane (ambient pressure) may exceed the pressure in the pressurized cabin. This is called "negative" pressure differential. As the airplane descends "through" the cabin, the negative pressure differential can build up to -0.36 PSID.

Aircraft with pressurized cabins are designed with fuselage structural strengths sufficient to these anticipated pressure differentials. However, exposing a fuselage to pressure differentials in excess of that anticipated risks overstressing the fuselage and, in an extreme case, risking structural failure. Excess positive or negative pressure differential might occur if there is a malfunction or failure of the CPCS. In order to mitigate the risk, aircraft may be provided with safety valves (e.g., pressure relief valves) which operate (e.g., independent of the automatic and manual control functions of the CPCS) to limit the pressure differentials between the cabin and the external environment. In some cases, the safety valve may be intended to limit both positive and negative pressure differentials. In some cases, one safety valve is intended to limit positive pressure differentials and another safety valve is intended to limit negative pressure differentials.

In many cases, a safety valve may be pneumatically actuated such that, for an aircraft with all-electric outflow valves, the safety valve is not routinely testable. Rather, a safety valve may be substantially limited to periodic testing which occurs during an aircraft's scheduled maintenance cycle. Hence, in some cases (e.g., depending on CPCS architecture), a loss of functionality of a safety valve (e.g., a pneumatically actuated safety valve) may remain dormant or latent between scheduled testing events.

The present disclosure describes a pressure control system configured to control an outflow valve (e.g., typically two or more outflow valves) to control a pressure within a compartment of a vehicle (e.g., within cabin of an aircraft) and/or a differential pressure between the compartment and an external environment surrounding the vehicle. Each outflow valve may be a portion of a valve subsystem. The valve subsystem includes three valve operation motor assemblies, with each motor assembly including its own separate motor assembly controller. Any of the three separate motor assembly's may be utilized by the pressure control system to cause operation of the outflow valve using its associated motor assembly. Hence, the valve subsystem is configured to provide for redundancy and failure response. Further, the valve subsystem is configured to respond based on both differential pressure data received from a CPCS of the pressure control system (e.g., received from avionics of the aircraft) and based on a differential pressure provided by an independent sensor, such that the pressure control system may act to limit a differential pressure in the event of a malfunction or failure of the CPCS.

The pressure control system may include a first valve subsystem VS-1 configured to operate a first valve OFV-1 (e.g., a first outflow valve). The pressure control system may include a second valve subsystem VS-2 configured to operate a second valve OFV-2 (e.g., a second outflow valve). In some examples, the pressure control system includes a first controller C1 (e.g., a first CPCS controller) and a second controller C2 (e.g., a second CPCS controller). Each of controller C1 and controller C2 may be configured to cause the operation of both first valve OFV-1 and second valve OFV-2. Hence, the pressure control system (e.g., when operating in a typical manner) may be configured to control both of first overflow valve OFV-1 and second overflow valve OFV-2 using only one of controller C1 or controller C2.

Stated similarly, the pressure control system may be configured such that, in some modes of operation, one of controller C1 or controller C2 commands first valve subsystem VS-1 to operate first valve OFV-1 and also commands second valve subsystem VS-2 to operate second valve OFV-2. In some examples, the pressure control system is configured such that one of controller C1 or controller C2 acts as a primary controller and the other of controller C1 or controller C2 acts as a standby controller. For example, controller C1 and controller C2 may be configured to communicate with each other, such that the standby controller (e.g., one of controller C1 or controller C2) is informed if a fault develops in the primary controller (e.g., the other of controller C1 or controller C2). The pressure control system is configured such that control of the first overflow valve OFV-1 and the second overflow valve OFV-2 shifts from the primary controller to the standby controller if a fault is detected in the primary controller.

In some examples, CPCS 100 is configured to perform an automated switchover based, for example, which of controller C1 or controller C2 acted as a primary controller during a previous operation (e.g., a previous flight of vehicle 102). For example, a controller (e.g., controller C1 and/or controller C2) may be configured to determine if it operated as the primary controller during the previous operation (e.g., the previous flight) and (e.g., on controller startup) establish its operation as a standby controller. The controller (e.g., controller C1 and/or controller C2) may be configured to determine if it operated as the standby controller during the previous operation (e.g., the previous flight) and (e.g., on controller startup) establish its operation as the primary controller. In examples, the controller is configured to record its status as the primary controller or the standby controller for and/or during a given operation (e.g., a given flight).

First valve subsystem VS-1 may include a first motor assembly MA-1, a second motor assembly MB-1, and a manual motor assembly MAN-1. The pressure control system may utilize any one of first motor assembly MA-1, second motor assembly MB-1, or manual motor assembly MAN-1 to operate first valve OFV-1. In examples, controller C1 is configured to cause operation of first motor assembly MA-1, controller C2 is configured to cause operation of second motor assembly MB-1, and an manual actuator (e.g., located in a control deck) is configured to cause operation of manual motor assembly MAN-1. First valve subsystem VS-1 is configured such that only one of controller C1, controller C2, or the manual actuator may cause the operation of first valve OFV-1 for a given operation of OFV-1 (e.g., an operation causing OFV-1 to travel in an opening direction or a closing direction).

For example, first motor assembly MA-1 may be configured to actuate first valve OFV-1 when a first motor command is received from first controller C1 (e.g., in response to differential pressure data). Second motor assembly MB-1 may be configured to actuate first valve OFV-1 when a second motor command is received from second controller C2 (e.g., in response to differential pressure data). Manual motor assembly MAN-1 may be configured to receive a manual command from an actuator (e.g., located in a control deck) to cause manual motor assembly MAN-1 to actuate first valve OFV-1. Hence, first valve subsystem VS-1 includes first motor assembly MA-1, second motor assembly MB-1, and manual motor assembly MAN-1 as three separate motor assembly assemblies (e.g., each of first motor assembly MA-1, second motor assembly MB-1, and manual motor assembly MAN-1 includes its own motor controller and motoring device). Each of the motor assemblies may cause operation of first valve OFV-1 based on a motor command from one of controller C1, controller C2, or a manual command.

The pressure control system may be configured such that, in a typical operation (e.g., when the manual motor assembly MAN-1 is not engaged), only one of controller C1 (using first motor assembly MA-1) or controller C2 (using second motor assembly MB-1) issues motor commands causing first valve subsystem VS-1 to operate first valve OFV-1. For example, the pressure control system is configured such that, when controller C1 issues a first motor command to first motor assembly MA-1 to cause operation of first overflow valve OFV-1, the pressure control system limits or prevents controller C2 from commanding second motor assembly MB-1 to operate the first overflow valve OFV-1. Similarly, when controller C2 issues a second motor command to second motor assembly MB-1 to cause operation of first overflow valve OFV-1, the pressure control system limits or prevents controller C1 from commanding first motor assembly MA-1 to operate the first overflow valve OFV-1. Hence, the pressure control system is configured such that, in a typical operation, either controller C1 causes the operation of first overflow valve OFV-1 using first motor assembly MA-1, or controller C2 causes the operation of first overflow valve OFV-1 using second motor assembly MB-1. The pressure control system may be configured such that either of controller C1 or controller C2 may be selected (e.g., by an operator) to cause the operation of first overflow valve OFV-1.

The pressure control system is configured such that, if the manual motor assembly MAN-1 is activated (e.g., by a manual command from the actuator located, for example, in the control deck), the pressure control system limits or prevents both controller C1 and controller C2 from causing operation of first overflow valve OFV-1. Hence, activation of the manual motor assembly MAN-1 (e.g., by a pilot) substantially overrides control of first overflow valve OFV-1 by controller C1 or controller C2. Thus, the manual motor assembly MAN-1 of first valve subsystem VS-1 is configured such that an operator may substantially transition the pressure control system from an auto mode wherein one of controller C1 or controller C2 controls the position of first overflow valve OFV-1 based on differential pressure data (e.g., from avionics) to a manual mode wherein the operator controls the position of first overflow valve OFV-1.

The pressure control system is configured to cause the operation of first overflow valve OFV-1 based on both differential pressure data received by controller C1 and/or controller C2 and based on a differential pressure provided by an independent sensor, such that the pressure control system may act to limit a differential pressure in the event of a malfunction or failure of controller C1, controller C2, or elsewhere in the vehicle. The pressure control system may be configured to substantially override controller C1 and/or controller C2 to cause the operation of first valve OFV-1 when the differential pressure from the independent sensor is greater than or equal to a threshold (e.g., either or both of a positive pressure differential and/or a negative pressure differential). For example, in some examples, second motor assembly MB-1 may include the sensor. First valve subsystem VS-1 (e.g., second motor assembly MB-1) may be configured to substantially override motor commands from both of controller C1 and controller C2 and cause the operation of first valve OFV-1 when the differential pressure is greater than or equal to the threshold.

The pressure control system may be configured to substantially confirm that the differential pressure from the sensor is greater than or equal to the threshold using a software circuit. For example, first valve subsystem VS-1 (e.g., second motor assembly MB-1) may include a main MCU (e.g., a first microprocessor) and a sensor MCU (e.g., a second microprocessor). Both the main MCU and the sensor MCU are configured to receive a sensed differential pressure from the sensor. If the sensor MCU assesses the sensed differential pressure as greater than the threshold, the sensor MCU may issues a first signal to a comparative device. If the main MCU assesses the sensed differential pressure as greater than the threshold, the main MCU may issue a second signal to the comparative device. The comparative device is configured such that both the first signal and the second signal must be received before first valve subsystem VS-1 (e.g., second motor assembly MB-1) may override controller C1 and controller C2 to cause the operation of first valve OFV-1.

Second valve subsystem VS-2 may be configured to cause operation of second valve OFV-2 similarly to the manner in which first valve subsystem VS-1 causes operation of first valve subsystem VS-1. For example, second valve subsystem VS-2 may include a first motor assembly MA-2, a second motor assembly MB-2, and a manual motor assembly MAN-2. First motor assembly MA-2 may be configured to receive a motor command from controller C1 to operate second overflow valve OFV-2, second motor assembly MB-2 may be configured to receive a motor command from controller C2 to operate second overflow valve OFV-2, and/or manual motor assembly MAN-2 may be configured to receive a motor command from a second manual actuator (e.g., located in the control deck) to operate second overflow valve OFV-2. The pressure control system is configured such that, if the manual motor assembly MAN-2 is activated, the pressure control system limits or prevents both controller C1 and controller C2 from causing operation of second overflow valve OFV-2, such that activation of manual motor assembly MAN-2 (e.g., by a pilot) substantially overrides control of second overflow valve OFV-2 by controller C1 or controller C2.

In some examples, second motor assembly MB-2 includes a second sensor, with second valve subsystem VS-2 (e.g., second motor assembly MB-2) configured to substantially override motor commands from both of controller C1 and controller C2 and cause the operation of second valve OFV-2 when a differential pressure sensed by the second sensor is greater than or equal to a threshold. The second valve subsystem VS-2 (e.g., second motor assembly MB-2) may include a second main MCU (e.g., a third microprocessor) and a second sensor MCU (e.g., a fourth microprocessor), and a second comparator, such that the pressure control system pressure control system substantially confirm that a differential pressure sensed by the second sensor is greater than or equal to the threshold using a second software circuit.

As used herein, a differential pressure may refer to a positive differential pressure wherein a pressure within a compartment of a vehicle (e.g., a cabin pressure) is greater than an external pressure of an environment external to the vehicle, or the differential pressure may refer to a negative differential pressure wherein the pressure within the compartment of the vehicle (e.g., the cabin pressure) is less than the external pressure of the environment external to the vehicle. In examples, when the differential pressure is greater than or equal to a threshold, this may refer to an absolute value of a positive differential pressure being greater than or equal to an absolute value of a first threshold, or may refer to an absolute value of a negative differential pressure being greater than or equal to an absolute value of a second threshold. In examples, the first threshold is indicative of a threshold for a positive differential pressure and/or the second threshold is indicative of a threshold for a negative differential pressure.

While an aircraft is primarily referred to herein, the pressure control system and methods described herein can be used with other vehicles, including marine vehicles and/or land vehicles.

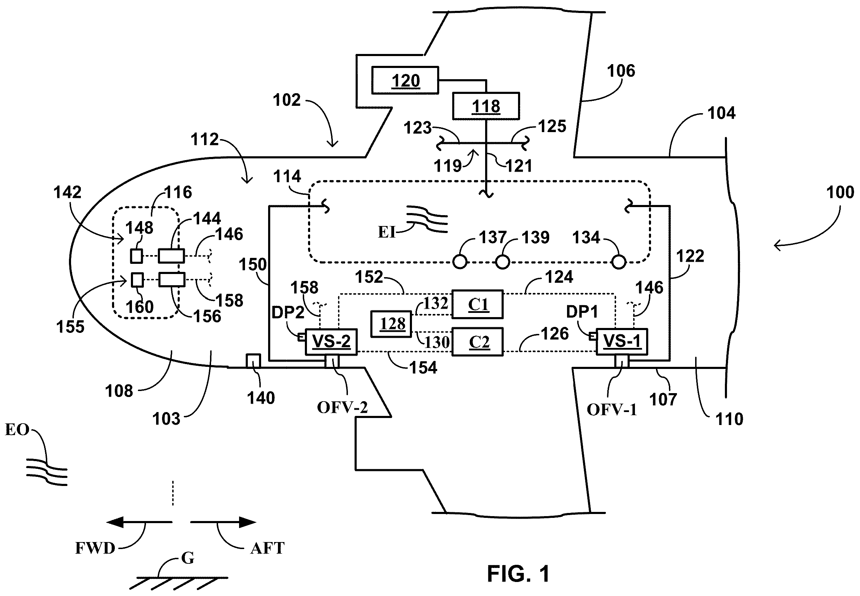

FIG. 1 schematically illustrates a Cabin Pressure Control System 100 ("CPCS 100") configured to control a pressure of an internal environment EI (e.g., air) within one or more compartments 112 ("compartments 112") of a vehicle 102. In examples, vehicle 102 (e.g., an aircraft) includes a fuselage 104 and wing 106 coupled (e.g., affixed) to fuselage 104. In examples, vehicle 102 includes a body 103 ("vehicle body 103") defining a forward portion 108 and an aft portion 110. In examples, vehicle 102 is configured to travel (e.g., during flight operations) in at least a forward direction FWD (e.g., a direction from aft portion 110 towards forward portion 108) relative to ground G (e.g., earth's surface). In examples, vehicle 102 is configured to travel (e.g., during flight operations) through an external atmosphere EO substantially external to and/or surrounding vehicle 102. Compartments 112 ("compartments 112") may include one or compartments such as cabin 114, flight deck 116, and/or other compartments of vehicle 102 (e.g., one or more cargo holds, galleys, lavatories, and/or other compartments). In examples, compartments 112 are supported by and/or housed within fuselage 104.

CPCS 100 includes a first controller C1 (e.g., a first automatic pressure controller) configured to control and/or regulate a pressure within compartments 112 during flight and other operations of vehicle 102. In examples, CPCS 100 includes a second controller C2 (e.g., a second automatic pressure controller) configured to control and/or regulate the pressure within compartments 112. In examples, controller C1 and/or controller C2 are configured to substantially control a discharge of a fluid (e.g., air) from internal atmosphere EI within compartments 112 to an external environment EO surrounding vehicle body 103. Vehicle 102 may be configured to separate compartments 112 and external environment EO using some portion of vehicle body 103, such as a bulkhead 107 (e.g., an aircraft exterior skin).

Vehicle 102 may include an environmental control system 118 ("ECS 118") configured to provide an inlet fluid flow (e.g., a pressurized air flow) to compartments 112. ECS 118 may be configured to receive the inlet fluid flow from one or more compressor stages of an engine 120 (e.g., an aircraft engine) supported by vehicle body 103, an electric air compressor, a turbo-compressor, and/or another fluid source configured to provide the inlet fluid flow (e.g., an air flow) to ECS 118. In examples, ECS 118 is configured to provide the inlet fluid flow to compartments 112 via an air supply system 119. Air supply system 119 may include a first section 121 (e.g., a first branch) configured to deliver some portion of the inlet fluid flow to cabin 114, a second section 123 (e.g., a second branch) configured to deliver another portion of the inlet fluid flow to flight deck 116, and/or one or more others sections 125 configured to deliver one or more other portions of the inlet fluid flow to one or more other compartments of vehicle 102. Air supply system 119 may include a variety of components for transporting and dispersing the inlet fluid flow into compartments 112 including, but not limited to supply ducting, supply air vents, gaspers, and the like. The supply ducting, supply air vents, gaspers, and the like may be distributed throughout compartments 112.

CPCS 100 is configured to control first valve OFV-1 and second valve OFV-2 using only one of first controller C1 or second controller C2. Stated similarly, CPCS 100 is configured such that (e.g., in a typical operation) either first controller C1 controls the operation of first valve OFV-1 and second valve OFV-2, or second controller C2 controls the operation of first valve OFV-1 and OFV-2. First controller C1 and/or second controller C2 may control first valve OFV-1 and second valve OFV-2 to control a pressure of internal environment EI within compartments 112. For example (e.g., in an automatic operation) first controller C1 and/or second controller C2 may receive a pressure signal from a cabin sensor 134 configured to sense the pressure of internal environment EI. First controller C1 and/or second controller C2 may be configured to cause the operation of first valve OFV-1 and second valve OFV-2 based on comparison of the pressure signal from cabin sensor 134 with a pressure setpoint (e.g., a pressure setpoint corresponding to about 6000 to 8000 feet above sea level). Hence (e.g., in the automatic operation), first controller C1 and/or second controller C2 may cause operation of first valve OFV-1 and second valve OFV-2 to keep a pressure of internal environment EI proximate the pressure setpoint for the comfort and safety of passengers and crew during flight operations of vehicle 102.

Although cabin sensor 134 is depicted as a single sensor in FIG. 1 for illustrative purposes, cabin sensor 134 may comprise one or more sensors configured to sense the pressure of internal environment EI.

CPCS 100 is further configured to allow a manual operation of OFV-1 and/or OFV-2 (e.g., to substantially override and/or disable operations of OFV-1 or OFV-2 commanded by first controller C1 or second controller C2). For example, first manual system 142 (e.g., located in flight deck 116) may be configured to provide a manual control of first valve OFV-1 and substantially override and/or disable operations of OFV-1 by first controller C1 or second controller C2. First manual system 142 may be configured to be operable by an operator of vehicle 102 (e.g., a pilot). CPCS 100 may be configured to allow first controller C1 or second controller C2 to continue to cause operation of OFV-2 when first manual system 142 is used to cause operation of first valve OFV-1. Hence, CPCS 100 is configured such that the operator (e.g., the pilot) may exercise manual control of first valve OFV-1 as first controller C1 or second controller C2 continues to control operation of OFV-2. Similarly, a second manual system 155 (e.g., located in flight deck 116) may be configured to provide a manual control of second valve OFV-2 and substantially override and/or disable operations of OFV-2 by first controller C1 or second controller C2, such that the operator (e.g., the pilot) may exercise manual control of second valve OFV-2 as first controller C1 or second controller C2 to continues to control operation of OFV-1.

CPCS 100 includes a first valve subsystem VS-1 ("subsystem VS-1") including first valve OFV-1 (e.g., an outflow valve). First valve OFV-1 is configured to receive a fluid flow (e.g., an airflow) from compartments 112 and discharge the fluid flow to external environment EO. For example, first valve OFV-1 may be configured to receive the fluid flow from compartments 112 via one or more conduits of vehicle 102 such as conduit 122 and discharge the fluid flow to external environment EO. First valve OFV-1 may be configured to control a rate of the fluid flow (e.g., from conduit 122) discharged to external environment EO based on a position of first valve OFV-1.

For example, first valve OFV-1 may be configured to establish a closed position wherein first valve OFV-1 substantially fluidically isolates conduit 122 and external environment EO, a fully open position wherein first valve OFV-1 defines a fully open flow area through which the fluid flow may discharge to external environment EO, and a plurality of intermediate open positions wherein, at each intermediate open position, first valve OFV-1 defines an intermediate flow area less than the fully open flow area. First valve OFV-1 may be configured to (e.g., for a given pressure of internal environment EI and a given pressure of external environment EO) increase the rate of the fluid flow discharged to external environment EO when first valve OFV-1 moves from a first intermediate open position defining a first intermediate flow area to a second intermediate open position defining a second intermediate flow area greater than the first intermediate flow area (e.g., when first valve OFV-1 moves in an opening direction). First valve OFV-1 may be configured to (e.g., for the given pressure of internal environment EI and the given pressure of external environment EO) decrease the rate of the fluid flow discharged to external environment EO when first valve OFV-1 moves from the second intermediate open position to the first intermediate open position (e.g., when first valve OFV-1 moves in a closing direction).

Subsystem VS-1 is configured to cause operation of first valve OFV-1 (e.g., to cause first valve OFV-1 to establish the open position, establish an intermediate open position, establish the closed position, move in the opening direction, and/or move in the closing direction). Controller C1 and/or controller C2 are configured to control a pressure of pressure of compartments 112 (e.g., a pressure of internal environment EI) by commanding subsystem VS-1 to cause the operation of first valve OFV-1. Controller C1 and/or controller C2 may be configured to command subsystem VS-1 to position and/or modulate first valve OFV-1 to discharge the fluid flow from compartments 112 to control the pressure of compartments 112 as ECS 118 provides the fluid flow to compartments 112. For example, controller C1 may be configured to command subsystem VS-1 to cause the operation of first valve OFV-1 using a communication link 124. Controller C2 may be configured to command subsystem VS-1 to cause the operation of first valve OFV-1 using a communication link 126.

As discussed, CPCS 100 is configured to control first valve OFV-1 using only one of controller C1 or controller C2 for a given operation of OFV-1. For example, CPCS 100 (e.g., one or more of controller C1, controller C2, and/or subsystem VS-1) may be configured such that, when controller C1 issues a first C1 command to subsystem VS-1 to cause operation of first valve OFV-1, CPCS 100 limits or prevents controller C2 from causing subsystem VS-1 to operate first valve OFV-1. Similarly, when controller C2 issues a first C2 command to subsystem VS-1 to cause operation of first valve OFV-1, CPCS 100 limits or prevents controller C1 from causing subsystem VS-1 to operate the first valve OFV-1. Hence, CPCS 100 is configured (e.g., in a typical operation) such that one of controller C1 or controller C2 causes subsystem VS-1 to operate first valve OFV-1. In examples, CPCS 100 may be configured such that either of controller C1 or controller C2 may be selected (e.g., by an operator) to cause the operation of first valve OFV-1.

Controller C1 and/or controller C2 may be configured to command subsystem VS-1 to position first valve OFV-1 to control and/or regulate a pressure of internal environment EI (e.g., a pressure within compartments 112) and/or a differential pressure between the pressure of internal environment EI and a pressure of external environment EO. For example, controller C1 (e.g., via communication link 124) and/or controller C2 (e.g., via communication link 126) may be configured to command subsystem VS-1 to position first valve OFV-1 based on the pressure signal from cabin sensor 134. In some examples, controller C1 and/or controller C2 may be configured to command subsystem VS-1 to position first valve OFV-1 based on external pressure data or differential pressure data. The external pressure data may be indicative of a pressure of external environment EO. The differential pressure data may be indicative of a differential pressure between the pressure of internal environment EI and the pressure of external environment EO. In examples, CPCS 100 is be configured such that an air data system 128 ("ADS 128) provides the external pressure data and/or the differential pressure data. Controller C1 and/or controller C2 may be configured to determine the differential pressure data using the pressure signal from cabin sensor 134 and the external pressure data. In examples, ADS 128 is a primary air data system of an aircraft or a secondary air data system of the aircraft. ADS 128 may include processing circuitry and/or control circuitry supported by vehicle 102 (e.g., vehicle body 103) and configured to determine the differential pressure data.

ADS 128 may be configured to detect and/or determine the pressure of external environment EO in any manner. For example, ADS 128 may be configured to detect and/or determine a pressure of external environment EO based on an altitude of vehicle 102, a flight posture of vehicle 102, a climb and/or rate of climb of vehicle 102, a descent and/or rate of descent of vehicle 102, whether vehicle 102 is in flight or on the ground, an ambient pressure of external environment EO and/or expected changes to the ambient pressure of external environment EO, an airspeed of vehicle 102, an angle-of-attack of vehicle 102 relative to external environment EO, and/or other parameters descriptive of a flight posture of vehicle 102. In some examples, ADS 128 is configured to determine the pressure of external environment EO using a sensor 140 configured to sense a pressure of external environment EO.

Subsystem VS-1 is further configured to cause the operation of first valve OFV-1 when subsystem VS-1 receives a manual command. First manual system 142 (e.g., located in flight deck 116) may be configured to cause CPCS 100 to issue the manual command. In examples, first manual system 142 includes circuitry 144 (e.g., processing circuitry and/or operating circuitry) configured to issue the manual command (e.g., via communication link 146) to subsystem VS-1. First manual system 142 may include an actuator 148 (e.g., in flight deck 116) configured to cause circuitry 144 to issue the manual command. Actuator 148 may be configured to be operable by an operator of vehicle 102 (e.g., a pilot). In examples, actuator 148 is a switch, button, touchscreen, or the like.

CPCS 100 is configured such that, if the manual command is received by subsystem VS-1, CPCS 100 limits or prevents both controller C1 and controller C2 from causing an operation of first valve OFV-1. For example, in some examples, CPCS 100 is configured such that a manual command received by subsystem VS-1 limits or prevents subsystem VS-1 from responding to a first C1 command sent by first controller C1 and a first C2 command send by controller C2. Hence, activation of actuator 148 (e.g., by a pilot) substantially disables and/or overrides control of subsystem VS-1 by controller C1 and controller C2. Thus, CPCS 100 is configured such that an operator (e.g., the pilot) may substantially transition CPCS 100 from an auto mode wherein one of controller C1 or controller C2 controls the position of first valve OFV-1 based on a pressure of internal environment EI to a manual mode wherein the operator controls the position of first valve OFV-1.

In examples, circuitry 144 is configured to send the manual command to subsystem VS-1 to cause first valve OFV-1 to establish at least the fully open position and the closed position. In examples, circuitry 144 is configured to send the manual command to subsystem VS-1 to cause first valve OFV-1 to establish at least one of (e.g., substantially all of) the plurality of intermediate open positions. Actuator 148 may be configured to cause circuitry 144 to issue the manual command causing first valve OFV-1 to establish the fully open position, the closed position, and/or the at least one of the plurality of intermediate open positions. Thus, CPCS 100 is configured such that the operator (e.g., the pilot) may cause first valve OFV-1 to establish the fully open position, the closed position, and/or an intermediate open positions using actuator 148.

Subsystem VS-1 may be further configured to cause operation of first valve OFV-1 based on a differential pressure between internal environment E1 and external environment EO. Subsystem VS-1 may be configured to substantially disregard commands from controller C1 and/or controller C2 when the differential pressure is greater than or equal to a threshold. In examples, subsystem VS-1 includes a sensor DP1 configured to sense a differential pressure between internal environment E1 and external environment EO. Subsystem VS-1 may be configured to substantially disable and/or override commands from both of controller C1 and controller C2 and cause the operation of first valve OFV-1 when the sensed differential pressure of sensor DP1 is greater than or equal to the threshold.

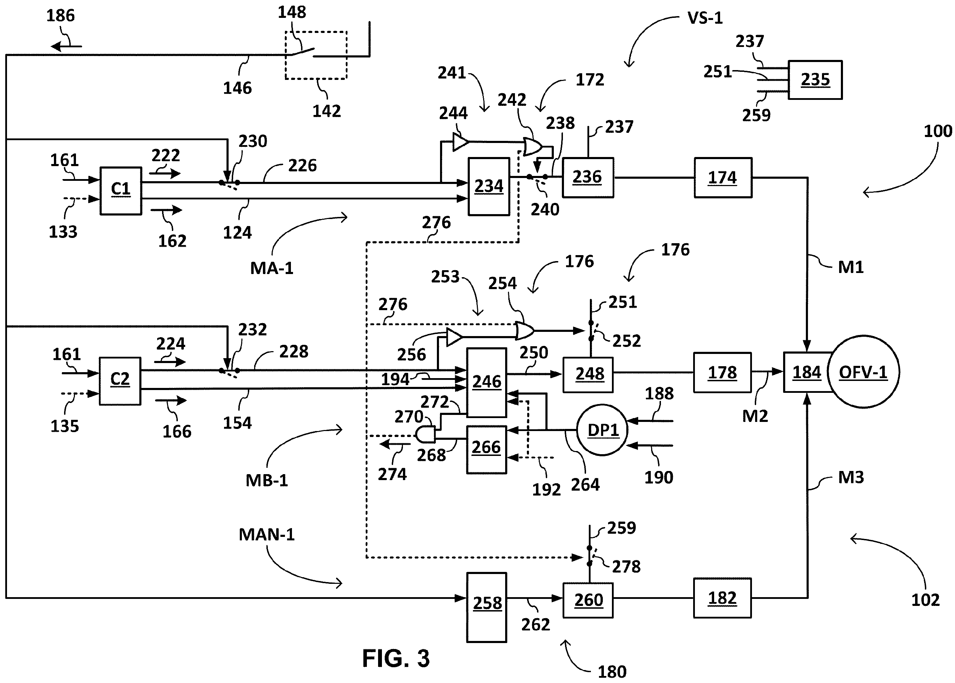

In examples, subsystem VS-1 includes a primary microprocessor (MCU 246 (FIG. 3)) and a sensor MCU (e.g., sensor MCU 266 (FIG. 3)) configured to receive the sensed differential pressure from sensor DP1. CPCS 100 may be configured such that subsystem VS-1 may only override commands from controller C1 and controller C2 when both the main MCU and the sensor MCU agree the sensed differential pressure of sensor DP1 is greater than or equal to the threshold. In some examples, the main MCU and the sensor MCU are configured to ascertain a determined differential pressure between internal environment E1 and external environment EO (e.g., using cabin sensor 134 and the external pressure data indicative of external environment EO). Subsystem VS-1 (e.g., the main MCU and/or the sensor MCU) may be configured to compare the determined differential pressure and the sensed differential pressure of sensor DP1 to provide a check on the operation of sensor DP1.

In examples, CPCS 100 includes a second valve subsystem VS-2 ("subsystem VS-2") including a second valve OFV-2 (e.g., an second outflow valve). Second valve OFV-2 may be configured to discharge a fluid flow (e.g., received via a conduit 150 or another portion of vehicle 102) from compartments 112 to external environment EO. In examples, second valve OFV-2 is configured similarly to first valve OFV-1, such that second valve OFV-2 may establish a second valve closed position wherein second valve OFV-2 substantially fluidically isolates conduit 150 and external environment EO, a second valve fully open position wherein second valve OFV-2 defines a fully open flow area, and a plurality of second valve intermediate open positions each of which define an intermediate flow area less than the fully open flow area of the second valve fully open position. Second valve OFV-2 may be configured to increase or decrease a flow rate of the fluid flow discharged to external environment EO by moving from one second valve intermediate open position to another second valve intermediate open position in substantially the same manner as that described when first valve OFV-1 moves from the first intermediate open position to the second intermediate open position or when first valve OFV-1 moves from the second intermediate open position to the first intermediate open position.

Subsystem VS-2 is configured to cause operation of second valve OFV-2 (e.g., to cause second valve OFV-2 to establish the second valve open position, establish a second valve intermediate open position, establish the second valve closed position, move in the opening direction, and/or move in the closing direction). Controller C1 and/or controller C2 are configured to control a pressure of pressure of compartments 112 (e.g., a pressure of internal environment EI) by commanding subsystem VS-2 to cause the operation of second valve OFV-2. Controller C1 and/or controller C2 may be configured to command subsystem VS-2 to position and/or modulate second valve OFV-2 to discharge the fluid flow from compartments 112 to control the pressure of compartments 112 as ECS 118 provides the fluid flow to compartments 112.

CPCS 100 is configured to control second valve OFV-2 using only one of controller C1 or controller C2 for a given operation of OFV-2. For example, CPCS 100 (e.g., one or more of controller C1, controller C2, and/or subsystem VS-2) may be configured such that, when controller C1 issues a second C1 command to subsystem VS-2 (e.g., via communication link 152) to cause operation of second valve OFV-2, CPCS 100 limits or prevents controller C2 from causing subsystem VS-2 to operate second valve OFV-2. Similarly, when controller C2 issues a second C2 command to subsystem VS-2 (e.g., via communication link 154) to cause operation of second valve OFV-2, CPCS 100 limits or prevents controller C1 from causing subsystem VS-2 to operate the second valve OFV-2.

For example, as previously discussed, CPCS 100 may be configured such that one of controller C1 or controller C2 causes the operation of both first valve OFV-1 and second valve OFV-2. As an example, first controller C1 may be configured to issue the first C1 command to subsystem VS-1 to cause operation of first valve OFV-1 together with issuing the second C1 command to subsystem VS-2 to cause operation of second valve OFV-2. Similarly, second controller C2 may be configured to issue the first C2 command to subsystem VS-1 to cause operation of first valve OFV-1 together with issuing the second C2 command to subsystem VS-2 to cause operation of second valve OFV-2. Hence, CPCS 100 is configured (e.g., in a typical operation) such that only one of controller C1 or controller C2 may cause both subsystem VS-1 to operate first valve OFV-1 and cause subsystem VS-2 to operate second valve OFV-2.

Subsystem VS-2 is further configured to cause the operation of second valve OFV-2 when subsystem VS-2 receives a second manual command from second manual system 155. In examples, second manual system 155 includes circuitry 156 (e.g., processing circuitry and/or operating circuitry) configured to issue the second manual command (e.g., via communication link 158) to subsystem VS-1. Second manual system 155 may include an actuator 160 (e.g., in flight deck 116) configured to cause circuitry 156 to issue the manual command. Actuator 160 may be configured to be operable by an operator of vehicle 102 (e.g., a pilot). In examples, actuator 160 is a switch, button, touchscreen, or the like.

CPCS 100 is configured such that, if the second manual command is received by subsystem VS-2, CPCS 100 limits or prevents both controller C1 and controller C2 from causing an operation of second valve OFV-2. For example, in some examples, CPCS 100 is configured such that a second manual command received by subsystem VS-2 limits or prevents subsystem VS-2 from responding to a second C1 command sent by first controller C1 and a second C2 command send by controller C2. Hence, activation of actuator 160 (e.g., by a pilot) substantially overrides control of subsystem VS-2 by controller C1 and controller C2. Thus, CPCS 100 is configured such that an operator (e.g., the pilot) may substantially transition CPCS 100 from an auto mode wherein one of controller C1 or controller C2 controls the position of second valve OFV-2 based on differential pressure data (e.g., from ADS 128) to a manual mode wherein the operator controls the position of second valve OFV-2.

Circuitry 156 may be configured to send the second manual command to cause second valve OFV-2 to establish one or more of the second valve fully open position, the second valve closed position, and/or a second valve intermediate open position. Actuator 160 may be configured to cause circuitry 156 to issue the second manual command causing second valve OFV-2 to establish the second valve fully open position, the second valve closed position, and/or the second valve intermediate open position. Thus, CPCS 100 is configured such that the operator (e.g., the pilot) may cause second valve OFV-2 to establish the second valve fully open position, the second valve closed position, and/or a second valve intermediate open position using actuator 160.

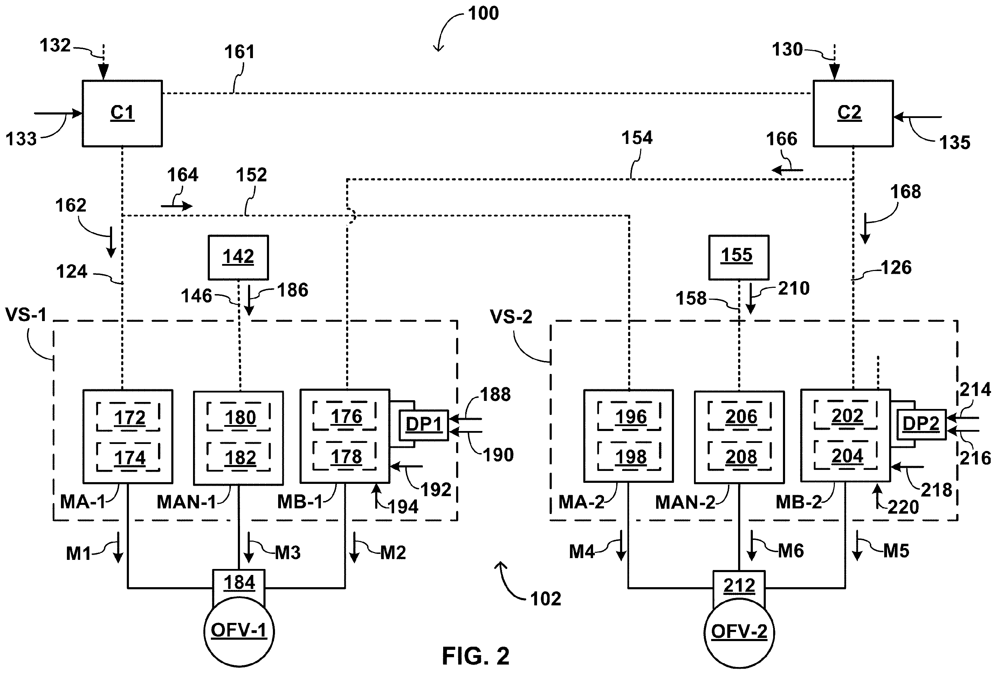

Subsystem VS-2 may be further configured to cause operation of first valve OFV-1 based on a second sensed differential pressure sensed by a sensor DP2 (e.g., a second sensed differential pressure between internal environment E1 and external environment EO). Subsystem VS-2 may be configured to substantially disregard commands from controller C1 and/or controller C2 when the second sensed differential pressure is greater than or equal to a threshold. In examples, subsystem VS-2 (e.g., MB-2 controller 202 (FIG. 2)) includes a processor and a second sensor MCU configured to receive the second sensed differential pressure. CPCS 100 may be configured such that subsystem VS-2 may only override commands from controller C1 and controller C2 when both the second main MCU and the second sensor MCU agree the second sensed differential pressure is greater than or equal to the threshold. The second main MCU and the second sensor MCU may be determine a second differential pressure between internal environment E1 and external environment EO (e.g., using cabin sensor 134 and the external pressure data indicative of external environment EO) and compare the second differential pressure and the second sensed differential pressure to provide a check on the operation of sensor DP2.

FIG. 2 illustrates a schematic block diagram of CPCS 100 including first controller C1 and second controller C2 configured to control first valve OFV-1 and second valve OFV-2. Subsystem VS-1 is configured to cause the operation of first valve OFV-1. Subsystem VS-2 is configured to cause the operation of second valve OFV-2. CPCS 100 is configured such that subsystem VS-1 causes operation of first valve OFV-1 based on a command from one of first controller C1 or second controller C2 and such that subsystem VS-2 causes operation of second valve OFV-2 based on a command from the one of first controller C1 or second controller C2. Stated similarly, CPCS 100 is configured such that a single controller (e.g., one of first controller C1 or second controller C2) causes subsystem VS-1 to cause operation of first valve OFV-1 and causes subsystem VS-2 to cause operation of second valve OFV-2.

For example, CPCS 100 may be configured such that one of first controller C1 or second controller C2 acts as a primary controller and the other of first controller C1 or second controller C2 acts as a standby controller. CPCS 100 may be configured to allow the primary controller to command subsystem VS-1 to operate first valve OFV-1 and also command subsystem VS-2 to operate second valve OFV-2. CPCS 100 may be configured to substantially limit and/or prevent the standby controller from causing subsystem VS-1 to operate first valve OFV-1 and causing subsystem VS-2 to operate second valve OFV-2. The primary controller and the standby controller may be configured to communicate with each other (e.g., via a communication link 161). CPCS 100 may be configured such that, if a fault is detected in the primary controller, the standby controller receives a fault detection signal via communication link 161 and subsequently commences causing subsystem VS-1 to operate first valve OFV-1 and causing subsystem VS-2 to operate second valve OFV-2.

For example, controller C1 may be configured to issue a first C1 command 162 (e.g., via communication link 124) to subsystem VS-1 and a second C1 command 164 (e.g., via communication link 152) to subsystem VS-2. Controller C2 may be configured to issue a first C2 command 166 (e.g., via communication link 154) to subsystem VS-1 and a second C2 command 168 (e.g., via communication link 126) to subsystem VS-2. When controller C1 acts as a primary controller and controller C2 acts as a standby controller, CPCS 100 may be configured to allow first C1 command 162 to cause operation of first valve OFV-1, allow second C1 command 164 to cause operation of second valve OFV-2, substantially limit first C2 command 166 from causing operation of first valve OFV-1, and substantially limit second C2 command 168 from causing operation of second valve OFV-2. CPCS 100 may be configured such that, if a fault is detected in controller C1 (e.g., if controller C2 receives a fault detection signal via communication link 161), CPCS 100 commences allowing first C2 command 166 to cause operation of first valve OFV-1 and allowing second C2 command 168 to cause operation of second valve OFV-2.

In examples, when controller C2 acts as the primary controller and controller C1 acts as the standby controller, CPCS 100 may be configured to allow first C2 command 166 to cause operation of first valve OFV-1, allow second C2 command 168 to cause operation of second valve OFV-2, substantially limit first C1 command 162 from causing operation of first valve OFV-1, and substantially limit second C1 command 164 from causing operation of second valve OFV-2. CPCS 100 may be configured such that, if a fault is detected in controller C2 (e.g., if controller C1 receives a fault detection signal via communication link 161), CPCS 100 commences allowing first C1 command 162 to cause operation of first valve OFV-1 and allowing second C1 command 164 to cause operation of second valve OFV-2.

First controller C1 is configured to receive a pressure sense signal 133 indicative of a pressure of internal environment EI (e.g., sensed by cabin sensor 134). First controller C1 may be configured to cause the operation of first valve OFV-1 (e.g., by issuing first C1 command 162) and second valve OFV-2 (e.g., by issuing second C1 command 164) based on comparison of pressure sense signal 133 with a pressure setpoint (e.g., a pressure setpoint corresponding to about corresponding to about 6000 to 8000 feet above sea level). Second controller C2 is configured to receive a pressure sense signal 135 indicative of a pressure of internal environment EI (e.g., sensed by cabin sensor 134). Second controller C2 may be configured to cause the operation of first valve OFV-1 (e.g., by issuing first C2 command 166) and second valve OFV-2 (e.g., by issuing second C2 command 168) based on comparison of pressure sense signal 135 with the pressure setpoint or another pressure setpoint.

In examples, controller C1 may be a different type of controller from controller C2 to, for example, reduce the likelihood of a common failure for both controller C1 and controller C2, such as such as manufacturing process defect, an actual design defect, or from an external influence such as exposure to temperature, radiation, vibration, or power interrupts. For example, controller C1 may include one or more microprocessors having a different type from one or more microprocessors of controller C2. A type of microprocessor may refer to a manufacturer, a model number, a design, a manufacturing facility, a software compiler, an operating system, a pin count, a logic family (e.g., complementary metal-oxide-semiconductor (CMOS) or transistor-transistor logic (TTL)), and/or a register size (e.g., eight or sixteen bits) of a microprocessor. Additionally or alternatively, the operating system of the one or more microprocessors of controller C1 may be different than the operating system of the one or more microprocessors of controller C2. In some examples, controller C1 receives a different power supply than controller C2. For example, a power supply for controller C1 may be substantially independent of a power supply for controller C2 (e.g., for example, by using different power sources aboard vehicle 102 such as different batteries or generators, and/or by power supply from different vehicle supplied power buses).

CPCS 100 is configured such that first manual system 142 may issue a first manual command to subsystem VS-1 to cause operation of first OFV-1 (e.g., via communication link 146). CPCS 100 may be configured to substantially limit first C1 command 162 and first C2 command 166 from causing operation of first valve OFV-1 when first manual system 142 causes operation of OFV-1. In examples, CPCS 100 is configured to allow (e.g., to continue allowing) second C1 command 164 or second C2 command 168 to cause operation of second valve OFV-2 when first manual system 142 causes operation of first valve OFV-1. CPCS 100 is configured such that second manual system 155 may issue a second manual command to subsystem VS-2 to cause operation of second valve OFV-2 (e.g., via communication link 158). CPCS 100 may be configured to substantially limit second C1 command 164 and second C2 command 168 from causing operation of second valve OFV-1 when second manual system 155 causes operation of second valve OFV-2. In examples, CPCS 100 is configured to allow (e.g., to continue allowing) first C1 command 162 or first C2 command 166 to cause operation of first valve OFV-1 when second manual system 155 causes operation of OFV-2.

Subsystem VS-1 includes first motor assembly MA-1, second motor assembly MB-1, and manual motor assembly MAN-1. First motor assembly MA-1 includes a motor controller 172 ("MA-1 controller 172) and a motor 174 ("MA-1 motor 174"). MA-1 controller 172 is configured to cause MA-1 motor 174 to generate a first mechanical power M1 and cause the operation of first valve OFV-1 when MA-1 controller receives first C1 command 162. In examples, MA-1 motor 174 is configured to transfer first mechanical power M1 to a gearbox 184. Gearbox 184 may be configured to receive first mechanical power M1 from MA-1 motor 174 and transfer first mechanical power M1 to first valve OFV-1 to cause operation of first valve OFV-1. Hence, subsystem VS-1 is configured to cause operation of first valve OFV-1 in response to first C1 command 162 from first controller C1.

Second motor assembly MB-1 includes a motor controller 176 ("MB-1 controller 176) and a motor 178 ("MB-1 motor 178"). MB-1 controller 176 is configured to cause MB-1 motor 178 to generate a second mechanical power M2 and cause the operation of first valve OFV-1 when MA-1 controller receives first C2 command 166. In examples, MB-1 motor 178 is configured to transfer second mechanical power M2 to gearbox 184. Gearbox 184 may be configured to receive second mechanical power M2 from MB-1 motor 178 and transfer second mechanical power M2 to first valve OFV-1 to cause operation of first valve OFV-1. Hence, subsystem VS-1 is configured to cause operation of first valve OFV-1 in response to first C2 command 166 from second controller C2.

In examples, when controller C1 is operating as a primary controller and controller C2 is operating as a standby controller, subsystem VS-1 is configured to allow MA-1 controller 172 to cause operation of MA-1 motor 174 in response to first C1 command 162 and prevent MB-1 controller 176 from causing operation of MB-1 motor 178 in response to first C2 command 166. For example, when controller C1 is operating as the primary controller, subsystem VS-1 may be configured to electrically isolate (e.g., using signal 224 (FIG. 3)) a power supply to MB-1 controller 176 such that MB-1 controller 176 is prevented from and/or unable to cause MB-1 motor 178 to generate second mechanical power M2. Thus, when controller C1 is operating as the primary controller, subsystem VS-1 may be configured to allow operation of first valve OFV-1 (e.g., by MA-1 motor 174) in response to first C1 command 162 and substantially prevent operation of first valve OFV-1 (e.g., by MB-1 motor 178) in response to first C2 command 166.

When controller C2 is operating as the primary controller and controller C1 is operating as the standby controller, subsystem VS-1 may be configured to allow MB-1 controller 176 to cause operation of MB-1 motor 178 in response to first C2 command 166 and prevent MA-1 controller 172 from causing operation of MA-1 motor 174 in response to first C1 command 162. For example, when controller C2 is operating as the primary controller, subsystem VS-1 may be configured to limit MA-1 controller 172 (e.g., using signal 222 (FIG. 3)) a power supply to MA-1 controller 172 such that MA-1 controller 172 is prevented from and/or unable to cause MA-1 motor 174 to generate the first mechanical power. Thus, when controller C2 is operating as the primary controller, subsystem VS-1 may be configured to allow operation of first valve OFV-1 (e.g., by MB-1 motor 178) in response to second C2 command 166 and substantially prevent operation of first valve OFV-1 (e.g., by MA-1 motor 174) in response to first C1 command 162.

Manual motor assembly MAN-1 includes a motor controller 180 ("MAN-1 controller 180) and a motor 182 ("MAN-1 motor 182"). MAN-1 controller 180 is configured to cause MAN-1 motor 182 to generate a third mechanical power M3 and cause the operation of first valve OFV-1 when MAN-1 controller 180 receives a first manual command 186 from first manual system 142 (e.g., when a pilot operates actuator 148 (FIG. 1)). MAN-1 motor 182 may be configured to transfer third mechanical power M3 to gearbox 184. Gearbox 184 may be configured to receive third mechanical power M3 from MAN-1 motor 182 and transfer third mechanical power M3 to first valve OFV-1 to cause operation of first valve OFV-1. Hence, subsystem VS-1 is configured to cause operation of first valve OFV-1 in response to first manual command 186 from first manual system 142. Gearbox 184 may include one or more gearboxes configured such that any one of the MA-1 motor (e.g., via first mechanical power M1), MB-1 motor (e.g., via second mechanical power M2), and/or MAN-1 motor (e.g., via third mechanical power M3) may control the position of first valve OFV-1.

Subsystem VS-1 may be configured to prevent MA-1 controller 172 from causing operation of MA-1 motor 174 in response to first C1 command 162 and prevent MB-1 controller 176 from causing operation of MB-1 motor 178 in response to first C2 command 166 when first manual system 142 issues first manual command 186. For example, when first manual system 142 issues first manual command 186, subsystem VS-1 may be configured to substantially prevent MA-1 controller 172 from generating first mechanical power M1 (e.g., using switch 230 (FIG. 3)), and substantially prevent MB-1 controller from generating second mechanical power M2 (e.g., using switch 232 (FIG. 3)). Thus, when first manual system 142 issues first manual command 186, subsystem VS-1 may be configured to substantially prevent operation of first valve OFV-1 in response to first C1 command 162 and in response to first C2 command 166.

Subsystem VS-1 (e.g., motor assembly MB-1) is configured to cause operation of first valve OFV-1 based on a first differential pressure between internal environment EI and external environment EO (FIG. 1). Sensor DP1 may be configured to determine the first differential pressure using a pressure sense signal 188 indicative of the pressure of internal environment EI and pressure sense signal 190 indicative of the pressure of external environment EO. Subsystem VS-1 may be configured to substantially prevent first motor assembly MA-1 from responding to first C1 command 162 of controller C1 (e.g., using signal 274, logic device 242, signal 222, and switch 240 (FIG. 3) (FIG. 3)) and substantially prevent second motor assembly MA-2 from responding to first C2 command 166 of controller C2 (e.g., using signal 224, logic device 254, and switch 252 (FIG. 3)) when the first differential pressure is greater than or equal to the threshold. In examples, subsystem VS-1 is configured to cause operation of first valve OFV-1 using MB-1 controller 176 and MB-1 motor 178 when sensor DP1 detects the first differential pressure exceeding the threshold. For example, MB-1 controller 176 (e.g., MCU 246 and/or sensor MCU 266 (FIG. 3)) may be configured such that, when sensor DP1 detects the first differential pressure exceeding the threshold, MB-1 controller 176 causes the operation of MB-1 motor 178. In examples, pressure sense signal 188 is indicative of a pressure sensed by a sensor other than sensor 134. Pressure sense signal 190 may be indicative of a pressure sensed by a sensor other that utilized by ADS 128.

In examples, subsystem VS-1 (e.g., the MB-1 controller) is configured to receive a pressure signal 192 indicative of the pressure of internal environment EI and a pressure signal 194 indicative of the pressure of external environment EO. In some examples, pressure signal 192 is indicative of a pressure sensed by a cabin sensor 137 (FIG. 1), which is a different sensor than cabin sensor 134. Pressure signal 194 may be provided by ADS 128. For example, pressure signal 194 may be indicative of a representative pressure determined based on an altitude of vehicle 102 determined by ADS 128. Subsystem VS-1 (e.g., the MB-1 controller) may be configured to determine a determined differential pressure using pressure signal 192 and pressure signal 194. In examples, subsystem VS-1 (e.g., the MB-1 controller) may be configured to compare the determined differential pressure and the first differential pressure of sensor DP1 to provide a check on the operation of sensor DP1. CPCS 100 (e.g., subsystem VS-1, MB-1 controller) may be configured to provide an error signal and/or alarm if the first differential pressure and the determined differential pressure differs by more than an alert threshold.

Subsystem VS-2 may be configured similarly to subsystem VS-1. Subsystem VS-2 includes first motor assembly MA-2 which includes a motor controller 196 ("MA-2 controller 196) and a motor 198 ("MA-2 motor 198"), second motor assembly MB-2 which includes a motor controller 202 ("MB-2 controller 202) and a motor 204 ("MB-2 motor 204"), and manual motor assembly MAN-2 which include a motor controller 206 ("MAN-2 controller 206) and a motor 208 ("MAN-2 motor 208"). MA-2 controller 196 is configured to cause MA-2 motor 198 to generate a fourth mechanical power M4 and cause the operation of second valve OFV-2 when MA-2 controller receives second C1 command 164. MB-2 controller 202 is configured to cause MB-2 motor 204 to generate a fifth mechanical power M5 and cause the operation of second valve OFV-2 when MB-2 controller receives second C2 command 168. MAN-2 controller 206 is configured to cause MAN-2 motor 208 to generate a sixth mechanical power M6 and cause the operation of second valve OFV-2 when MAN-2 controller receives a second manual command 210 from second manual system 155 (e.g., when a pilot operates actuator 160 (FIG. 1)).

MA-2 motor 198 may be configured to transfer fourth mechanical power M4 to a gearbox 212. MB-2 motor 204 may be configured to transfer fifth mechanical power M5 to gearbox 212. MAN-2 motor 208 may be configured to transfer sixth mechanical power M6 to gearbox 212. Gearbox 212 may be configured to transfer fourth mechanical power M4, fifth mechanical power M5, and/or sixth mechanical power M6 to second valve OFV-2 to cause operation of second valve OFV-2. Hence, subsystem VS-2 is configured to cause operation of second valve OFV-2 in response to second C1 command 164 from first controller C1 and/or second C2 command 168 from second controller C2. Gearbox 212 may include one or more gearboxes configured such that any one of the MA-2 motor (e.g., via fourth mechanical power M4), MB-2 motor (e.g., via fifth mechanical power M5), and/or MAN-2 motor (e.g., via sixth mechanical power M6) may control the position of second valve OFV-2.

In examples, when controller C1 is operating as a primary controller and controller C2 is operating as a standby controller, subsystem VS-2 is configured to allow MA-2 controller 196 to cause operation of MA-2 motor 198 in response to second C1 command 164 and prevent MB-2 controller 202 from causing operation of MB-2 motor 204 in response to second C2 command 168. When controller C2 is operating as the primary controller and controller C2 is operating as the standby controller, subsystem VS-2 may be configured to allow MB-2 controller 202 to cause operation of MB-2 motor 204 in response to second C2 command 168 and prevent MA-2 controller 196 from causing operation of MA-2 motor 198 in response to second C1 command 164.

In examples, subsystem VS-2 (e.g., motor assembly MB-2) is configured to cause operation of first valve OFV-2 based on a second differential pressure sensed by a second sensor DP2. Sensor DP2 may be configured to determine the second differential pressure using a pressure sense signal 214 indicative of the pressure of internal environment EI and pressure sense signal 216 indicative of the pressure of external environment EO. Subsystem VS-2 may be configured to substantially disable and/or override second C1 command 164 from controller C1 and second C2 command 168 from controller C2 when the second differential pressure exceeds a second threshold. MB-2 controller 202 may be configured such that, when sensor DP2 detects the second differential pressure exceeding the threshold, MB-2 controller 202 causes the operation of MB-2 motor 204 to cause operation of second valve OFV-2. In some examples, the second threshold of subsystem VS-2 may be substantially equal to the threshold of subsystem VS-1. In some examples, the second threshold of subsystem VS-2 may be greater than or less than the threshold of subsystem VS-1. In examples, pressure sense signal 214 is indicative of a pressure sensed by a sensor other than sensor 134, sensor 137, a sensor 139 (FIG. 1), and/or a sensor providing pressure sense signal 188. Pressure sense signal 216 may be is indicative of a pressure sensed by a sensor other that utilized by ADS 128 and/or other than a sensor providing pressure sense signal 190.

In some examples, subsystem VS-2 (e.g., the MB-2 controller) is configured to receive a pressure signal 218 indicative of the pressure of internal environment EI and a pressure signal 220 indicative of the pressure of external environment EO (e.g., provided by ADS 128). In examples, pressure signal 218 is indicative of a pressure sensed by a cabin sensor 139 (FIG. 1), which is a different sensor than sensor 134 and/or sensor 137. Subsystem VS-2 (e.g., the MB-1 controller) may be configured to determine a second determined differential pressure using pressure signal 218 and pressure signal 220, and compare the second determined differential pressure and the second differential pressure to provide a check on the operation of sensor DP2. CPCS 100 (e.g., subsystem VS-2, MB-2 controller) may be configured to provide an second error signal and/or second alarm if the second differential pressure and the second determined differential pressure differs by more than an alert threshold.

FIG. 3 illustrates a schematic block diagram of a pressure control system 100 including controller C1, controller C2, and including first motor assembly MA-1, second motor assembly MB-1, and manual motor assembly MAN-1 of subsystem VS-1. Although FIG. 3 is discussed with reference to first motor assembly MA-1, second motor assembly MB-1, and manual motor assembly MAN-1, first motor assembly MA-2 of subsystem VS-2 may be configured similarly to first motor assembly MA-1, second motor assembly MB-2 of subsystem VS-2 may be configured similarly to second motor assembly MB-2, and/or manual motor assembly MAN-2 of subsystem VS-2 may be configured similarly to manual motor assembly MAN-1. Further, controller C1, controller C2, and subsystem VS-1 may have any functionality described herein whether or not such functionality is discussed in reference to or depicted in FIG. 3.

Subsystem VS-1 is configured to produce first mechanical power M1, second mechanical power M2, or third mechanical power M3 to cause the operation of first valve OFV-1. MA-1 controller 172 is configured to cause MA-1 motor 174 to generate first mechanical power M1 when MA-1 controller 172 receives first C1 command 162, MB-1 controller 176 is configured to cause MB-1 motor 178 to generate second mechanical power M2 when MB-1 controller 176 receives first C2 command 166, and MAN-1 controller 180 is configured to cause MAN-1 motor 182 to generate third mechanical power M3 when MAN-1 controller 180 receives first manual command 186.

Subsystem VS-1 configured such that one of first C1 command 162 from controller C1, first C2 command 166 from controller C2, or first manual command 186 may cause operation of first valve OFV-1 for a given time. Stated similarly, subsystem VS-1 is configured such that only one of first C1 command 162, first C2 command 166, or manual command 186 may cause gearbox 184 to conduct a valve operation of first valve OFV-1 (e.g., a valve operation such as moving first valve OFV-1 in the opening direction or the closing direction).

CPCS 100 may be configured such that, in an auto mode (e.g., a typical operation of CPCS 100), one of controller C1 (e.g., via first C1 command 162) or controller C2 (e.g., via first C2 command 166) causes subsystem VS-1 to operate first valve OFV-1. In examples, CPCS 100 is configured to control which of controller C1 or controller C2 causes subsystem VS-1 to operate first valve OFV-1 using a C1 auto signal 222 and a C2 auto signal 224. For example, CPCS 100 may be configured such that MA-1 controller 172 must receive both of the C1 auto signal 222 and first C1 command 162 to cause operation of first valve OFV-1. CPCS 100 may be configured such that MB-1 controller 176 must receive both of C2 auto signal 224 and first C1 command 162 to cause operation of first valve OFV-1.

In examples, CPCS 100 includes a C1 auto enable channel 226 configured to communicate C1 auto signal 222 to MA-1 controller 172. CPCS 100 may include a C2 auto enable channel 228 configured to communicate C2 auto signal 224 to MB-1 controller 176. CPCS 100 may be configured such that either MA-1 controller 172 receives C1 auto signal 222 or MB-1 controller 176 receives C2 auto signal 224 in the auto mode (e.g., to avoid both of MA-1 controller 172 and MB-1 controller 176 attempting to concurrently operate first valve OFV-1). For example, in some examples, CPCS 100 includes a C1 auto enable switch 230 configured to allow MA-1 controller 172 to receive C1 auto signal 222 in a closed state and substantially prevent MA-1 controller 172 from receiving C1 auto signal 222 in an open state. CPCS 100 may include a C2 auto enable switch 232 configured to allow MB-1 controller 176 to receive C2 auto signal 224 in a closed state and substantially prevent MB-1 controller 176 from receiving C2 auto signal 224 in an open state. In FIG. 3, for C1 auto enable switch 230 and C2 auto enable switch, the closed state is depicted with a solid line and the open state is depicted with a dashed line.

In FIG. 3 both of auto enable switch 230 and auto enable switch 232 are depicted in the closed state (e.g., the activated state) for illustrative purposes. However, when operating in the auto mode, CPCS 100 may be configured such that one of auto enable switch 230 or auto enable switch 232 may be in the closed state as the other of auto enable switch 230 or auto enable switch 232 is in the open state. Hence, CPCS 100 may be configured such that, when controller C1 is acting as the primary controller and controller C2 is acting as the standby controller, auto enable switch 230 is in the closed state allowing MA-1 controller 172 to receive C1 auto signal 222 and auto enable switch 232 is in the open state substantially limiting MB-1 controller 176 from receiving C2 auto signal 224. CPCS 100 may be configured such that, when controller C2 is acting as the primary controller and controller C1 is acting as the standby controller, auto enable switch 232 is in the closed state allowing MB-1 controller 176 to receive C2 auto signal 224 and auto enable switch 230 is in the open state substantially limiting MA-1 controller 172 from receiving C1 auto signal 222.

MA-1 controller 172 may include an MCU 234 (e.g., a microprocessor) and circuitry 236 (e.g., operating circuitry and/or processing circuitry). MCU 234 may be configured to receive C1 auto signal 222 (e.g., from C1 auto enable channel 226) and first C1 command 162 from controller C1. MCU 234 may be configured to cause circuitry 236 (e.g., via a channel 238) to cause MA-1 motor 174 to produce first mechanical power M1. In examples, MA-1 controller 172 is configured to allow circuitry 236 to cause MA-1 motor 174 to produce first mechanical power M1 when MCU 234 receives C1 auto enable signal 222. MA-1 controller 172 may be configured to substantially prevent circuitry 236 from causing MA-1 motor 174 to produce first mechanical power M1 when MCU 234 does not receive (e.g., fails to receive) C1 auto enable signal 222. In examples, circuitry 236 is configured to receive electrical power from a power supply 235 (e.g., via a power conduit 237). MCU 234 may be receive electrical power from power supply 235 (e.g., via a power conduit (not shown)).

In examples, MA-1 controller 172 includes a switch 240 configured to establish an open state and a closed state. In FIG. 3, the closed state of switch 240 is depicted with a solid line and the open state of switch 240 is depicted with a dashed line. Switch 240 may be configured to allow circuitry 236 to cause MA-1 motor 174 to produce first mechanical power M1 in the closed state (e.g., as depicted in FIG. 3). Switch 240 may be configured to substantially prevent circuitry 236 from causing MA-1 motor 174 to produce first mechanical power M1 in the open state. In examples, MA-1 controller is configured such that switch 240 establishes the closed state when MCU 234 receives C1 auto enable signal 222 and such that switch 240 establishes the open state when MCU 234 does not receive (e.g., fails to receive) C1 auto enable signal 222.

For example, MA-1 controller 172 may include a logic circuit 241 configured to cause switch 240 to establish the open state or the closed state based on a presence or absence of C1 auto enable signal 222. In examples, logic circuit 241 is configured to cause switch 240 to establish the closed state when MA-1 controller 172 receives C1 auto enable signal 222. Logic circuit 241 may be configured to cause switch 240 to establish the open state when MA-1 controller 172 does not receive C1 auto enable signal 222. In examples, logic circuit 241 includes one or more devices 242 (" logic device 242") configured to cause switch 240 to establish the open state or the closed state based on a presence or absence of C1 auto enable signal 222. In some examples, logic device 242 is configured as an OR type device. In some examples, MA-1 controller 172 includes one or more device 244 ("inverter 244") configured to invert C1 auto enable signal 222, such that logic device 242 causes switch 240 to establish and/or maintain the closed state when MA-1 controller 172 receives C1 auto enable signal 222 and causes switch 240 to establish and/or maintain the open state when MA-1 controller 172 does not receive C1 auto enable signal 222.

MB-1 controller 176 may include an MCU 246 (e.g., a microprocessor) and circuitry 248 (e.g., operating circuitry and/or processing circuitry). MCU 246 may be configured to receive C2 auto signal 224 (e.g., from C2 auto enable channel 226) and first C2 command 166 from controller C2. MCU 246 may be configured to cause circuitry 248 (e.g., via a channel 250) to cause MB-1 motor 178 to produce second mechanical power M2. In examples, MB-1 controller 176 is configured to allow circuitry 248 to cause MB-1 motor 178 to produce second mechanical power M2 when MCU 246 receives C2 auto enable signal 224. MB-1 controller 176 may be configured to substantially prevent circuitry 248 from causing MB-1 motor 178 to produce second mechanical power M2 when MCU 246 does not receive (e.g., fails to receive) C2 auto enable signal 224. In examples, circuitry 248 is configured to receive electrical power from power supply 235 (e.g., via a power conduit 251). MCU 246 may be configured to receive electrical power from power supply 235 (e.g., via a power conduit (not shown)).

In examples, MB-1 controller 172 includes a switch 252 configured to establish an open state and a closed state. In FIG. 3, the closed state of switch 252 is depicted with a solid line and the open state of switch 252 is depicted with a dashed line. Switch 252 may be configured to allow circuitry 248 to cause MB-1 motor 178 to produce second mechanical power M2 in the closed state (e.g., as depicted in FIG. 3). Switch 252 may be configured to substantially prevent circuitry 246 from causing MB-1 motor 178 to produce second mechanical power M2 in the open state. In examples, MB-1 controller is configured such that switch 252 establishes the closed state when MCU 246 receives C2 auto enable signal 224 and such that switch 252 establishes the open state when MCU 246 does not receive (e.g., fails to receive) C2 auto enable signal 224. In some examples, switch 252 is configured to electrically connect power supply 235 to power conduit 251 in the closed state and substantially electrically isolate power conduit 251 from power supply 235 in the open state.

For example, MB-1 controller 176 may include a logic circuit 253 configured to cause switch 252 to establish the open state or the closed state based on a presence or absence of C2 auto enable signal 224. In examples, logic circuit 241 is configured to cause switch 252 to establish the closed state when MB-1 controller 176 receives C2 auto enable signal 224. Logic circuit 253 may be configured to cause switch 252 to establish the open state when MB-1 controller 176 does not receive C2 auto enable signal 224. In examples, logic circuit 253 includes one or more devices 254 (" logic device 254") configured to cause switch 252 to establish the open state or the closed state based on a presence or absence of C2 auto enable signal 224. In some examples, logic device 254 is configured as an OR type device. MB-1 controller 176 (e.g., logic device 254) may be configured such that switch 252 establishes the closed state when MB-1 controller 176 receives C2 auto enable signal 224 and establishes the open state when MB-1 controller 176 does not receive C2 auto enable signal 224.

Hence, CPCS 100 may be configured such that only one of first C1 command 162 from controller C1 or first C2 command 166 from controller C2 may cause subsystem VS-1 to operate first valve OFV-1. For example, when MA-1 controller 172 (e.g., MCU 234) receives C1 auto signal 222 and MB-1 controller 176 does not receive C2 auto signal 224 (e.g., when CPCS is configured such that controller C1 is a primary controller and controller C2 is a standby controller), logic circuit 241 may cause switch 240 to establish its closed position such that circuitry 236 may cause MA-1 motor 174 to produce first mechanical power M1 and logic circuit 253 may cause switch 252 to establish its open position such that circuitry 248 does not cause MB-1 motor 178 to produce second mechanical power M2. Gearbox 184 may cause the operation of first valve OFV-1 using first mechanical power M1.

Similarly, when MB-1 controller 176 (e.g., MCU 246) receives C2 auto signal 224 and MA-1 controller 172 does not receive C1 auto signal 222 (e.g., when CPCS is configured such that controller C2 is the primary controller and controller C2 is the standby controller), logic circuit 253 may cause switch 252 to establish its closed position such that circuitry 248 causes MB-1 motor 178 to produce second mechanical power M2 and logic circuit 241 may cause switch 240 to establish its open position such that circuitry 236 does not cause MA-1 motor 174 to produce first mechanical power M1. Gearbox 184 may cause the operation of first valve OFV-1 using second mechanical power M2.

MAN-1 controller 180 may include an MCU 258 (e.g., a microprocessor) and circuitry 260 (e.g., operating circuitry and/or processing circuitry). MCU 258 may be configured to receive first manual command 186 from first manual system 142. MCU 258 may be configured to cause circuitry 260 (e.g., via a channel 262) to cause MAN-1 motor 182 to produce third mechanical power M3. Gearbox 184 may cause the operation of first valve OFV-1 using third mechanical power M3. For example, CPCS 100 may be configured such that operation of first actuator 148 (e.g., by a pilot) causes first manual system 142 to issue first manual command 186, such that MAN-1 motor 182 produces third mechanical power M3. In examples, circuitry 260 is configured to receive electrical power from power supply 235 (e.g., via a power conduit 259). MCU 258 may be configured to receive electrical power from power supply 235 (e.g., via a power conduit (not shown)).

CPCS 100 is configured to substantially limit motor assembly MA-1 (e.g., MA-1 controller 172 and MA-1 motor 174) and limit motor assembly MB-1 (e.g., MB-1 controller 176 and MB-1 motor 178) from causing operation of first valve OFV-1 when first manual system 142 issues first manual command 186. In some examples, CPCS 100 is configured to substantially limit and/or prevent communication of C1 auto enable signal 222 and/or C2 auto enable signal 224 when first manual system 142 issues first manual command 186. For example, CPCS 100 may be configured such that issuance of first manual command 186 causes operation of C1 auto enable switch 230 (e.g., from the closed state to the open state), such that MA-1 controller (e.g., MCU 234) is substantially prevented from causing MA-1 motor 174 from producing first mechanical power M1. CPCS 100 may be configured such that issuance of first manual command 186 causes operation of C2 auto enable switch 232 (e.g., from the closed state to the open state), such that MB-1 controller (e.g., MCU 246) is substantially prevented from causing MB-1 motor 178 from producing second mechanical power M2. Thus, CPCS 100 may be configured such that issuance of first manual command 186 limits operation of first valve OFV-1 by motor assembly MA-1 and motor assembly MB-1 while allowing operation of first valve OFV-1 by MAN-1 controller 180.

Subsystem VS-1 may be further configured to cause operation of first valve OFV-1 based on a differential pressure (e.g., between internal environment E1 and external environment EO) sensed by sensor DP1. Sensor DP1 may be configured to provide a DP signal 264 indicative of the differential pressure to a first microprocessor of subsystem VS-1 (e.g., MCU 246). Subsystem VS-1 may be configured to cause the operation of first valve OFV-1 (e.g., using the first microprocessor) when DP signal 264 is greater than or equal to a threshold. In examples, subsystem VS-1 is configured to substantially limit controller C1 and controller C2 from causing operation of OFV-1 when DP signal 264 is greater than or equal to the threshold.

Subsystem VS-1 may be configured to substantially confirm that DP signal 264 is greater than or equal to the threshold using a software circuit comprising the first microprocessor (e.g., MCU 246) and a microprocessor 266 ("sensor MCU 266"). Sensor DP1 may be configured to provide DP signal 264 to both the first microprocessor and sensor MCU 266. Sensor MCU 266 is configured to provide a signal representing the actual DP1 differential pressure signal to the first microprocessor (e.g., MCU 246). Sensor MCU 266 may be configured to issue a first input 268 to a logic circuit 270 (e.g., a comparative device) when sensor MCU 266 assess DP signal 264 as greater than or equal to the threshold. The first microprocessor may be configured to issue a second input 272 to logic circuit 270 when the first microprocessor assess DP signal 264 as greater than or equal to the threshold, and if it determines that the differential pressure information from sensor MCU 266 is also valid. Microprocessor 246 determines if the differential pressure information is valid from sensor microprocessor 266 by comparing the differential pressure information from microprocessor 266 to its own computed differential pressure result. If the two independent readings are within a pre-defined tolerance of each other, microprocessor 246 validates that the sensor microprocessor 266 differential pressure information is correct. If microprocessor 246 does not validate that sensor microprocessor 266's differential pressure information is correct, or if it has an internal fault, microprocessor 246 will not set second input 272 to be true (e.g., will not issue second input 272). Logic circuit 270 may be configured to provide an alert signal 274 if both of first input 268 and second input 272 indicate that DP signal 264 as greater than or equal to the threshold (e.g., if first input 268 and second input 272 indicate the first microprocessor and sensor MCU 266 agree). Subsystem VS-1 may be configured to substantially limit controller C1 and controller C2 from causing operation of OFV-1 when logic circuit 270 provides alert signal 274. In examples, logic circuit 270 includes one or more logic devices (e.g., one or more AND type logic devices). In examples, subsystem VS-1 is configured such that MCU 246 (of MB-1 controller 176) is the first microprocessor. MCU 246 may be configured to direct circuitry 248 (e.g., via channel 250) to cause MB-1 motor 178 to produce second mechanical power M2 when logic circuit 270 provides alert signal 274.

In examples, subsystem VS-1 is configured to provide alert signal 274 to MA-1 controller 172 (e.g., via channel 276) to substantially prevent operation of OFV-1 by MA-1 controller 172. For example, subsystem VS-1 may be configured to provide alert signal 274 to logic circuit 241. Logic circuit 241 (e.g., logic device 242) may be configured to cause switch 240 to establish and/or maintain the open state when logic circuit 241 receives alert signal 274, such that MCU 234 is limited and/or prevented from directing circuitry 236 to cause MA-1 motor to produce first mechanical power M1. Hence, in examples, logic circuit 241 (e.g., logic device 242) is configured to establish and/or maintain switch 240 in the open state when either of: (i) logic circuit 241 receives alert signal 274, or (ii) C1 auto enable signal 222 is not received by MCU 234 (e.g., due to inverter 244). In some examples, logic circuit 241 (e.g., logic device 242) is configured to establish and/or maintain switch 240 in the closed state only when both of: (i) logic circuit 241 does not receive alert signal 274, and (ii) C1 auto enable signal 222 is received by MCU 234 (e.g., due to inverter 244).

Subsystem VS-1 may be configured to allow operation of OFV-1 by MCU 246 and/or circuitry 248 when logic circuit 270 provides alert signal 274. In some examples, MCU 246 is configured to direct circuitry 248 to cause MB-1 motor to further open or fully open first valve OFV-1 when logic circuit 270 provides alert signal 274 (e.g., using a backup motor command). In some examples, logic circuit 253 is configured to cause switch 252 to establish and/or maintain the closed state when logic circuit 253 receives alert signal 274, such that circuitry 248 may respond to commands provided by MCU 246. For example, logic circuit 253 (e.g., logic device 254) may be configured to cause switch 252 to establish and/or maintain the closed state when logic circuit 253 receives alert signal 274. Hence, in examples, logic circuit 253 (e.g., logic device 254) is configured to establish and/or maintain switch 252 in the closed state when either of: (i) logic circuit 253 receives alert signal 274, or (ii) C2 auto enable signal 224 is received by MCU 246. In some examples, logic circuit 253 (e.g., logic device 254) is configured to establish and/or maintain switch 252 in the open state only when both of: (i) logic circuit 253 does not receive alert signal 274, and (ii) C2 auto enable signal 224 is not received by MCU 246.

In some examples, subsystem VS-1 is configured to provide alert signal 274 to MAN-1 controller 180 to substantially prevent operation of OFV-1 by MAN-1 controller 180. For example, subsystem VS-1 may be configured to provide alert signal 274 to a switch 278 of MAN-1 controller 180. Switch 278 may be configured to establish an open state and a closed state. In FIG. 3, the closed state of switch 278 is depicted with a solid line and the open state of switch 278 is depicted with a dashed line. In some examples, switch 278 is configured to electrically connect power supply 235 to power conduit 259 in the closed state and substantially electrically power conduit 259 from power supply 235 in the open state. Switch 278 may be configured to establish and/or maintain the open state when MAN-1 controller 180 receives alert signal 274, such that MCU 258 is limited and/or prevented from directing circuitry 260 to cause MAN-1 motor to produce third mechanical power M3.

Logic circuit 241 (e.g., logic device 242 and/or inverter 244) and/or switch 240 provide an example through which MA-1 controller 172 may be configured to cause operation of first valve OFV-1 when MA-1 controller receives C1 auto enable signal 222. MA-1 controller 172 may be configured to cause operation of first valve OFV-1 when MA-1 controller receives C1 auto enable signal 222 in other ways in other examples. Logic circuit 253 (e.g., logic device 254 and/or inverter 256) and/or switch 252 provide an example through which MB-1 controller 176 may be configured to cause operation of first valve OFV-1 when MB-1 controller receives C2 auto enable signal 224. MB-1 controller 176 may be configured to cause operation of first valve OFV-1 when MB-1 controller receives C2 auto enable signal 224 in other ways in other examples. Logic circuit 241 may be configured to cause operation of switch 240 based on other inputs to logic circuit 241 in addition to C1 auto enable signal 222, such as one or more other inputs indicative of a fault detection within CPCS 100. Logic circuit 253 may be configured to cause operation of switch 252 based on additional inputs to logic circuit 253 in addition to C2 auto enable signal 224, such as one or more additional inputs indicative of a fault detection within CPCS 100. MCU 234 may be configured to receive one or more other MCU inputs in addition to first C1 command 162 and C1 auto enable signal 222, such as one or more other MCU inputs indicative of a fault detection within CPCS 100. MCU 246 may be configured to receive one or more other MCU inputs in addition to first C2 command 166 and C2 auto enable signal 224, such as one or more additional MCU inputs indicative of a fault detection within CPCS 100.

In some examples, first valve OFV-1 includes a butterfly valve that can rotate to increase or decrease a fluid flow rate through first valve OFV-1. First valve OFV-2 may include a butterfly valve that can rotate to increase or decrease a fluid flow rate through second valve OFV-2. First valve OFV-1 and/or second valve OFV-2 may be positioned within bulkhead 107 of a vehicle 102 (e.g., an aircraft) and may be in flow communication with internal environment EI and external environment EO. In some examples, first valve OFV-1 and/or second valve OFV-2 include a thrust recovery valve configured and/or positioned on vehicle 102 such that air exhausted from compartments 112 provides forward thrust to vehicle 102. In some examples, a first position sensor in gearbox 184 and/or proximate first valve OFV-1 may sense the position of first valve OFV-1. The first position sensor may be configured to provide a first signal indicative of a position of first valve OFV-1 to controller C1, controller C2, subsystem VS-1, and/or subsystem VS-2. In some examples, a second position sensor in gearbox 212 and/or proximate second valve OFV-2 may sense the position of second valve OFV-2. The second position sensor may be configured to provide a second signal indicative of a position of second valve OFV-2 to controller C1, controller C2, subsystem VS-1, and/or subsystem VS-2.

Auto enable switch 230, auto enable switch 232, switch 240, switch 252, and/or switch 278 may be any switching device configured to establish the open state and the closed state, such as a contact, a mechanical switch, one or more logic devices, or another group of devices configured to establish the open state and the closed state. In examples, the switching device comprises at least one input configured to receive a voltage and at least one output configured to deliver a voltage. The switching device may be configured to electrically connect the input and the output in the closed state and substantially electrically isolate the input and the output in the open state.

Controller C1, controller C2, MCU 234, circuitry 236, MCU 246, sensor MCU 266, circuitry 248, MCU 258, circuitry 144, circuitry 156, and/or other control circuitry of CPCS 100 (collectively, "CPCS 100 circuitry") may include fixed function circuitry and/or programmable operating circuitry. In examples, CPCS 100 circuitry includes circuitry configured to perform one or more functions of operating circuitry, such as sensing circuitry, processing circuitry, switching circuitry, communication circuitry, and/or other circuitries. CPCS 100 circuitry, as well as other processors, operating circuitry, controllers, control circuitry, processing circuitry, and the like, described herein, may include any combination of integrated circuitry, discrete logic circuity, analog circuitry, such as one or more microprocessors, digital signal processors (DSPs), application specific integrated circuits (ASICs), or field-programmable gate arrays (FPGAs). In some examples, any one or more of controller C1, controller C2, MCU 234, circuitry 236, MCU 246, sensor MCU 266, circuitry 248, MCU 258, circuitry 144, circuitry 156, and/or other control circuitry of CPCS 100 may include fixed function circuitry and/or programmable operating circuitry includes multiple components, such as any combination of one or more microprocessors, one or more DSPs, one or more ASICs, or one or more FPGAs, as well as other discrete or integrated logic circuitry, and/or analog circuitry.

Functions attributed to CPCS 100 circuitry may be embodied as software, firmware, hardware or any combination thereof. CPCS 100 circuitry may include, for instance, a variety of capacitors, transformers, switches, and the like configured to perform the functions of CPCS 100 circuitry. In examples, CPCS 100 circuitry may be configured to communicate with another device of CPCS 100 and/or vehicle 102, such as ECS 118, engine 120, components of air supply system 119, and/or components of CPCS 100 and/or vehicle 102. CPCS 100 circuitry may include any suitable hardware, firmware, software or any combination thereof for communicating with another device. In some examples, CPCS 100 circuitry may communicate with a networked computing device and a computer network.

CPCS 100 circuitry can also include memory configured to store program instructions, such as software, which may include one or more program modules, which are executable by CPCS 100 circuitry. The program instructions may be embodied in software and/or firmware. The memory can include any volatile, non-volatile, magnetic, optical, or electrical media, such as a random access memory (RAM), read-only memory (ROM), non-volatile RAM (NVRAM), electrically-erasable programmable ROM (EEPROM), ferroelectric RAM (FRAM), flash memory, or any other digital media. In some examples, the memory includes computer-readable instructions that, when executed by CPCS 100 circuitry, perform various functions described herein and/or other functions of CPCS 100 circuitry.

Actuator 148 and/or actuator 160 may have any suitable configuration. For example, actuator 148 and/or actuator 160 can include a switch (e.g., a mechanical switch), a button or keypad, a speaker configured to receive voice commands from a user, a display, such as a liquid crystal (LCD), light-emitting diode (LED), or organic light-emitting diode (OLED). In some examples, actuator 148 and/or actuator 160 may include a touch screen. First manual system 142 and/or second manual system 155 may be configured to receive a user input. In some examples, first manual system 142 and/or second manual system 155 is also configured to display information, such as one or more indications providing information on a status of controller C1, controller C2, subsystem VS-1 (e.g., motor assembly MAN-1 and/or first valve OFV-1), and/or subsystem VS-2 (e.g., motor assembly MAN-2 and/or second valve OFV-2).

Communication link 124, 130, 132, 146, 152, 154, 158, 161 (collectively "communication links 124-161") and/or C1 auto enable channel 226, C2 auto enable channel 228, and/or channel 228, 262, 276 (collectively "channels 228-276") may be wired and/or wireless communications links. In some examples, communication links 124-161 and/or channels 228-276 may comprise some portion of one or more of CPCS 100 circuitry. In some examples, communication links 124-161 and/or channels 228-276comprise a wired connection, a wireless Internet connection, a direct wireless connection such as wireless LAN, Bluetooth^{™}, Wi-Fi^{™}, and/or an infrared connection. Communication links 124-161 and/or channels 228-276 may utilize any wireless or remote communication protocol.

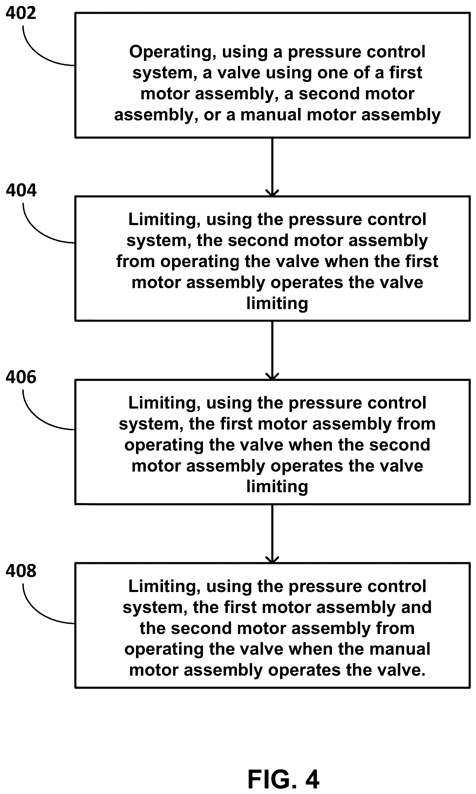

FIG. 4 is a flow diagram illustrating an example technique for controlling a pressure of an internal atmosphere EI within compartments 112 of a vehicle 102. While the technique is described with reference to CPCS 100 described herein, the technique may be used with other components and/or systems in other examples.

The technique includes operating, using CPCS 100, a first valve OFV-1 using one of a first motor assembly MA-1, a second motor assembly MB-1, or a manual motor assembly MAN-1 (402). In examples, first motor assembly MA-1 operates first valve OFV-1 using a first C1 command 162 provided by a C1 controller. In examples, second motor assembly MB-1 operates first valve OFV-1 using a first C2 command 166 provided by a C2 controller. In some examples, manual motor assembly MAN-1 operates first valve OFV-1 using a first manual command 186 from a first manual system 142.

The technique includes limiting second motor assembly MB-1 from operating first valve OFV-1 when first motor assembly MA-1 operates first valve OFV-1 (404). In examples, second motor assembly MB-1 is configured to operate first valve OFV-1 using the first C2 command 166 when controller C2 provides an auto enable signal 224 to second motor assembly MB-1. The technique may include limiting communication of auto enable signal 224 to second motor assembly MB-1 (e.g., to MCU 246) when first motor assembly MA-1 operates first valve OFV-1. In some examples, first motor assembly MA-1 is configured to operate valve OFV-1 using first C1 command 162 when controller C1 provides an auto enable signal 222 to first motor assembly MA-1 (e.g., to MCU 234). In examples, CPCS 100 is configured to provide auto enable signal 222 to first motor assembly MA-1 and limit communication of auto enable signal 224 to second motor assembly MB-1 to cause first motor assembly MA-1 to operate first valve OFV-1.

The technique includes limiting first motor assembly MA-1 from operating first valve OFV-1 when second motor assembly MB-1 operates first valve OFV-1 (406). The technique may include limiting communication of auto enable signal 222 to first motor assembly MA-1 when second motor assembly MB-1 operates first valve OFV-1. In examples, CPCS 100 is configured to provide auto enable signal 224 to second motor assembly MB-1 and limit communication of auto enable signal 222 to first motor assembly MA-1 to cause second motor assembly MB-1 to operate first valve OFV-1.

The technique includes limiting first motor assembly MA-1 from operating first valve OFV-1 and limiting second motor assembly MB-1 from operating first valve OFV-1 when manual motor assembly MAN-1 operates first valve OFV-1 (408). The technique may include limiting communication of auto enable signal 222 to first motor assembly MA-1 and limiting communication of auto enable signal 224 to second motor assembly MB-1 when manual motor assembly MAN-1 operates first valve OFV-1. In examples, an actuation of a first actuator 148 of first manual system 142 causes first manual system 142 (e.g., circuitry 144) to provide first manual command 186 to manual motor assembly MAN-1. In some examples, issuance of first manual command 186 causes the limited communication of auto enable signal 222 to first motor assembly MA-1 and causes the limited communication of auto enable signal 224 to second motor assembly MB-1.

In examples, an MA-1 controller 172 of first motor assembly MA-1 causes operation of an MA-1 motor 174 of first motor assembly MA-1 when first motor assembly MA-1 receives first C1 command 162. MA-1 motor 174 may produce a first mechanical power M1 when first motor assembly MA-1 receives first C1 command 162. An MB-1 controller 176 of second motor assembly MB-1 may cause operation of an MB-1 motor 178 of second motor assembly MB-1 when second motor assembly MB-1 receives first C2 command 166. MB-1 motor 178 may produce a second mechanical power M2 when second motor assembly MB-1 receives first C2 command 166. An MAN-1 controller 180 of manual motor assembly MAN-1 may cause operation of a MAN-1 motor 182 of manual motor assembly MAN-1 when manual motor assembly MAN-1 receives first manual command 186. MAN-1 motor 182 may produce a third mechanical power M3 when manual motor assembly MAN-1 receives the first manual command C2 command.

In examples, a subsystem VS-1 includes first motor assembly MA-1, second motor assembly MB-2, and manual motor assembly MAN-1. The technique may including subsystem VS-1 transferring first mechanical power M1, second mechanical power M2, or third mechanical power M3 to a gearbox 184. Gearbox 184 may cause the operation of first valve OFV-1 using one of first mechanical power M1, second mechanical power M2, or third mechanical power M3.

In some examples, a sensor DP1 configured to sense a differential pressure between internal environment E1 and external environment EO causes operation of first valve OFV-1. CPCS 100 may substantially disable an ability of first C1 command 162 and first C2 command 166 to cause the operation of first valve OFV-1 when DP1 senses differential pressure greater than or equal to a threshold. In examples, sensor DP-1 provides the sensed differential pressure to MB-1 controller 176 of second motor assembly MB-1. In examples, sensor DP-1 provides the sensed differential pressure to MCU 246 and a sensor MCU 266 of MB-1 controller 176. MB-1 controller 176 may issue an alert signal 274 when both MCU 246 and sensor MCU 266 agree the sensed differential pressure of sensor DP1 is greater than or equal to the threshold. In examples, MB-1 controller 176 issues a backup motor command MB-1 motor 178 when DP1 senses differential pressure greater than or equal to a threshold.

In some examples, controller C1 issues a second C1 command 164 to a first motor assembly MA-2 to cause operation of a second valve OFV-2. Controller C2 may issue a second C2 command 168 to a second motor assembly MB-2 to cause operation of second valve OFV-2. A second manual system 155 issues a second manual command 186 to a manual motor assembly MAN-2 to cause operation of second valve OFV-2. In examples, CPCS 100 limits second motor assembly MB-2 from operating second valve OFV-2 when second C1 command 164 causes operation of second valve OFV-2. CPCS 100 may limit first motor assembly MA-2 from operating second valve OFV-2 when second C2 command 168 causes operation of second valve OFV-2. CPCS 100 may limit first motor assembly MA-2 and second motor assembly MB-2 from operating second valve OFV-2 when second manual command 210 causes operation of second valve OFV-2.

The disclosure includes the following examples.

Example 1: A pressure control system for a compartment of a vehicle, the system comprising: a valve configured to fluidically couple the compartment and an external atmosphere surrounding the vehicle; a first motor assembly configured to operate the valve; a second motor assembly configured to operate the valve; and a manual motor assembly configured to operate the valve, wherein the first motor assembly is configured to receive a first motor command from a first controller to operate the valve, wherein the second motor assembly is configured to receive a second motor command from a second controller to operate the valve, wherein the pressure control system is configured to limit the second motor assembly from operating the valve when the first motor assembly operates the valve, and wherein the pressure control system is configured to limit the first motor assembly from operating the valve and limit the second motor assembly from operating the valve when the manual motor assembly operates the valve; and a sensor configured to provide a signal to the second motor assembly to cause operation of the valve using a backup motor command.

Example 2: The system of example 1, wherein the first motor assembly includes a first motor controller and a first motor, the first motor controller configured to cause operation of the first motor to operate the valve using the first motor command, wherein the second motor assembly includes a second motor controller and a second motor, the second motor controller configured to cause operation of the second motor to operate the valve using the second motor command, wherein the first motor controller is configured to limit use of the first motor to operate the valve when the second motor controller uses the second motor to operate the valve, and wherein the second motor controller is configured to limit use of the second motor to operate the valve when the first motor controller uses the first motor to operate the valve.

Example 3: The system of example 1 or example 2, further comprising an actuator configured to cause the manual motor assembly to operate the valve, wherein the actuator is configured to be operable by an operator of the vehicle.

Example 4: The system of any of examples 1-3, wherein the second motor assembly is configured to, if the differential pressure exceeds the threshold, limit operation of the valve by the manual motor assembly.

Example 5: The system of any of examples 1-4, wherein the second motor assembly includes: a main microprocessor configured to receive the signal from the sensor and issue a first alerting signal if the signal exceeds the threshold; a sensor microprocessor configured to receive the signal from the sensor and issue a second alerting signal if the signal exceeds the threshold; and a comparative device configured to receive the first alerting signal and the second alerting signal, wherein the comparative device is configured to, if first alerting signal and the second alerting signal is received, cause the second motor assembly to operate the valve.

Example 6: The system of any of examples 1-5, further comprising the first controller and the second controller, wherein the first controller is configured to cause operation of the valve in a first primary configuration and configured to limit operation of the valve in a first standby configuration, wherein the second controller is configured to cause operation of the valve in a second primary configuration and configured to limit operation of the valve in a second standby configuration, wherein the second controller is configured to establish the second standby configuration when the first controller is in the first primary configuration, and wherein the first controller is configured to establish the first standby configuration when the second controller is in the second primary configuration.

Example 7: The system of any of examples 1-6, further comprising the first controller and the second controller, wherein the first controller is configured to communicate a first fault signal to the second controller and the second controller is configured to communicate a second fault signal to the first controller, wherein the second motor assembly is configured to cause operation of the valve when the second controller receives the first fault signal, and wherein the first motor assembly is configured to cause operation of the valve when the first controller receives the second fault signal.

Example 8: The system of any of examples 1-7, wherein the signal of the sensor is indicative of a differential pressure between the compartment and the external atmosphere, and wherein the second motor assembly is configured to, when the second motor assembly receives the signal: limit use of the first motor command to operate the valve by the first motor assembly, and limit use of the second motor command to operate the valve.

Example 9: The system of any of examples 1-8, wherein the valve is a first valve, the first motor assembly is a motor assembly MA-1, the second motor assembly is a motor assembly MB-1, the manual motor assembly is a motor assembly MAN-1, the first motor command is a first C1 motor command, and the second motor command is a first C2 motor command, and further comprising: the first controller and the second controller; a second valve configured to fluidically couple the compartment and the external atmosphere; a motor assembly MA-2 configured to operate the second valve; a motor assembly MB-2 configured to operate the second valve; and a motor assembly MAN-2 configured to operate the second valve, wherein the first controller is configured to issue a second C1 motor command to cause motor assembly MA-2 to operate the second valve when the first controller issues the first C1 motor command to the first valve, wherein the motor assembly MB-2 is configured to receive a second C2 motor command from the second controller to operate the second valve, wherein the pressure control system is configured to limit the motor assembly MB-2 from operating the second valve when the motor assembly MA-2 operates the second valve, and wherein the pressure control system is configured to limit the motor assembly MA-2 and the motor assembly MB-2 from operating the second valve when the motor assembly MAN-2 operates the second valve.

Example 10: The system of example 9, further comprising a second sensor DP2 configured to provide a second signal to the motor assembly MB-2, wherein the second signal is indicative of a second differential pressure between the compartment and the external atmosphere, and wherein the motor assembly MB-2 is configured to, if the second differential pressure exceeds a second threshold: cause operation of the second valve, limit use of the second C1 motor command to operate the valve by the motor assembly MA-2, and limit use of the second C2 motor command to operate the valve.

Example 11: The system of example 10, wherein the motor assembly MB-2 is configured to, if the second differential pressure exceeds the second threshold, limit operation of the second valve by the motor assembly MAN-2.

Example 12: The system of example 10 or example 11, wherein the motor assembly MB-2 includes: a second main microprocessor configured to receive the second signal from the second sensor DP2 and issue a third alerting signal if the second signal exceeds the second threshold; a second sensor microprocessor configured to receive the second signal from the second sensor DP2 and issue a fourth alerting signal if the second signal exceeds the second threshold; and a second comparative device configured to receive the third alerting signal and the fourth alerting signal, wherein the second comparative device is configured to, if third alerting signal and the fourth alerting signal is received, cause the motor assembly MB-2 to operate the second valve.

Example 13: The system of any of examples 9-12, further comprising the second controller, wherein the motor assembly MB-1 is configured to receive a first C2 motor command from the second controller to operate the first valve, wherein the pressure control system is configured to limit the motor assembly MA-1 from operating the first valve when the second controller issues the first C2 motor command to the motor assembly MB-1, and wherein the pressure control system is configured to limit the motor assembly MA-2 from operating the second valve when the second controller issues the second C2 motor command to the motor assembly MB-2.

Example 14: The system of example 13, wherein the motor assembly MA-1 is configured to receive the first C1 motor command from the first controller to operate the first valve when the motor MAN-2 operates the second valve, wherein the motor assembly MB-1 is configured to receive the first C2 motor command from the second controller to operate the first valve when the motor assembly MAN-2 operates the second valve, wherein the motor assembly MA-2 is configured to receive the second C1 motor command from the first controller to operate the second valve when the motor assembly MAN-1 operates the first valve, and wherein the motor assembly MB-2 is configured to receive the second C2 motor command from the second controller to operate the second valve when the motor assembly MAN-1 operates the first valve.

Example 15: The system of any of examples 1-X, further comprising a gearbox configured to cause operation of the valve when the gearbox receives at least one of a first mechanical input from the first motor assembly, a second mechanical input from the second motor assembly, or a third mechanical input from the manual motor assembly, wherein the first motor assembly is configured to provide the first mechanical input when the first motor assembly receives the first motor command, wherein the second motor assembly is configured to provide the second mechanical input when the second motor assembly receives the second motor command, and wherein the manual motor assembly is configured to provide the third mechanical input when the manual motor assembly operates the valve.

Example 16: A pressure control system for a compartment of a vehicle, the system comprising: a first valve assembly including a first valve configured to fluidically couple the compartment and an external atmosphere surrounding the vehicle, a motor assembly MA-1 configured to operate the first valve, a motor assembly MB-1 configured to operate the first valve, and a motor assembly MAN-1 configured to operate the first valve; a second valve assembly including a second valve configured to fluidically couple the compartment and the external atmosphere, a motor assembly MA-2 configured to operate the second valve, a motor assembly MB-2 configured to operate the second valve, and a motor assembly MAN-2 configured to operate the second valve; a first controller configured to issue a first C1 motor command to cause the motor assembly MA-1 to operate the first valve and issue a second C1 motor command to cause the motor assembly MA-2 to operate the second valve; a second controller configured to issue a first C2 motor command to cause the motor assembly MB-1 to operate the first valve and issue a second C2 motor command to cause the motor assembly MB-2 to operate the second valve, wherein the pressure control system is configured to limit receipt of the first C1 motor command by the motor assembly MA-1 and limit receipt of the first C2 motor command by the motor assembly MB-1 when the motor assembly MAN-1 operates the first valve, and wherein the pressure control system is configured to limit receipt of the second C1 motor command by the motor assembly MA-2 and limit receipt of the second C2 motor command by the motor assembly MB-2 when the motor assembly MAN-2 operates the second valve; a first sensor DP1 configured to provide a first signal to the motor assembly MB-1, wherein the first signal is indicative of a first differential pressure between the compartment and the external atmosphere, and wherein the motor assembly MB-1 is configured to, if the first differential pressure exceeds a first threshold: cause operation of the first valve, limit receipt of the first C1 motor command by the motor assembly MA-1, and limit receipt of the first C2 motor command; and a second sensor DP2 configured to provide a second signal to the motor assembly MB-2, wherein the second signal is indicative of a second differential pressure between the compartment and the external atmosphere, and wherein the motor assembly MB-2 is configured to, if the second differential pressure exceeds a second threshold: cause operation of the second valve, limit receipt of the second C1 motor command by the motor assembly MA-2, and limit receipt of the second C2 motor command.

Example 17: The system of example 16, wherein the pressure control system is configured to limit receipt of the first C2 motor command by the motor assembly MB-1 and limit receipt of the second C2 motor command by the motor assembly MB-2 when the first controller issues the first C1 motor command and the second C1 motor command, and wherein the pressure control system is configured to limit receipt of the first C1 motor command by the motor assembly MA-1 and limit receipt of the second C1 motor command by the motor assembly MA-2 when the second controller issues the first C2 motor command and the second C2 motor command.

Example 18: The system of example 16 or example 17, further comprising: a first actuator configured to cause the motor assembly MAN-1 to operate the first valve, wherein the first actuator is configured to be operable by an operator of the vehicle; and a second actuator configured to cause the motor assembly MAN-2 to operate the second valve, wherein the second actuator is configured to be operable by the operator of the vehicle.

Example 19: A method, comprising: operating, using a pressure control system, a valve using one of a first motor assembly, a second motor assembly, or a manual motor assembly, wherein the valve is configured to fluidically couple a compartment of a vehicle and an external atmosphere surrounding the vehicle, wherein the first motor assembly is configured to operate the valve when the first motor assembly receives a first motor command from a first controller, wherein the second motor assembly is configured to operate the valve when the second motor assembly receives a second motor command from a second controller; limiting, using the pressure control system, the second motor assembly from operating the valve when the first motor assembly operates the valve and limiting, using the pressure control system, the first motor assembly from operating the valve when the second motor assembly operates the valve; limiting, using the pressure control system, the first motor assembly and the second motor assembly from operating the valve when the manual motor assembly operates the valve; and limiting, using a sensor, use of the first motor command to operate the valve and use of the second motor command to operate the valve when the sensor provides a signal to the second motor assembly, wherein the sensor is configured to provide the signal when a differential pressure between the compartment and the external atmosphere exceeds a threshold.

Example 20: The method of example 19, further comprising causing, using an actuator configured to be operable by an operator of the vehicle, the manual motor assembly to operate the valve.

Various examples have been described. These and other examples are within the scope of the following claims.

## Claims

1. A pressure control system for a compartment of a vehicle, the system comprising:
a valve configured to fluidically couple the compartment and an external atmosphere surrounding the vehicle;
a first motor assembly configured to operate the valve;
a second motor assembly configured to operate the valve; and
a manual motor assembly configured to operate the valve,
wherein the first motor assembly is configured to receive a first motor command from a first controller to operate the valve,
wherein the second motor assembly is configured to receive a second motor command from a second controller to operate the valve,
wherein the pressure control system is configured to limit the second motor assembly from operating the valve when the first motor assembly operates the valve, and
wherein the pressure control system is configured to limit the first motor assembly from operating the valve and limit the second motor assembly from operating the valve when the manual motor assembly operates the valve; and
a sensor configured to provide a signal to the second motor assembly to cause operation of the valve using a backup motor command.

2. The system of claim 1,
wherein the first motor assembly includes a first motor controller and a first motor, the first motor controller configured to cause operation of the first motor to operate the valve using the first motor command,
wherein the second motor assembly includes a second motor controller and a second motor, the second motor controller configured to cause operation of the second motor to operate the valve using the second motor command,
wherein the first motor controller is configured to limit use of the first motor to operate the valve when the second motor controller uses the second motor to operate the valve, and
wherein the second motor controller is configured to limit use of the second motor to operate the valve when the first motor controller uses the first motor to operate the valve.

3. The system of claim 1 or 2, further comprising an actuator configured to cause the manual motor assembly to operate the valve, wherein the actuator is configured to be operable by an operator of the vehicle.

4. The system of any of claims 1 to 3, wherein the second motor assembly is configured to, in response to the differential pressure exceeding the threshold, limit operation of the valve by the manual motor assembly.

5. The system of any of claims 1 to 4, wherein the second motor assembly includes:
a main microprocessor configured to receive the signal from the sensor and issue a first alerting signal in response to the signal exceeding the threshold;
a sensor microprocessor configured to receive the signal from the sensor and issue a second alerting signal in response to the signal exceeding the threshold; and
a comparative device configured to receive the first alerting signal and the second alerting signal, wherein the comparative device is configured to, in response to receiving the first alerting signal and the second alerting signal, cause the second motor assembly to operate the valve.

6. The system of any of claims 1 to 5, further comprising the first controller and the second controller,
wherein the first controller is configured to cause operation of the valve in a first primary configuration and configured to limit operation of the valve in a first standby configuration,
wherein the second controller is configured to cause operation of the valve in a second primary configuration and configured to limit operation of the valve in a second standby configuration,
wherein the second controller is configured to establish the second standby configuration when the first controller is in the first primary configuration, and
wherein the first controller is configured to establish the first standby configuration when the second controller is in the second primary configuration.

7. The system of any of claims 1 to 6, further comprising the first controller and the second controller,
wherein the first controller is configured to communicate a first fault signal to the second controller and the second controller is configured to communicate a second fault signal to the first controller,
wherein the second motor assembly is configured to cause operation of the valve when the second controller receives the first fault signal, and
wherein the first motor assembly is configured to cause operation of the valve when the first controller receives the second fault signal.

8. The system of any of claims 1 to 7,
wherein the signal of the sensor is indicative of a differential pressure between the compartment and the external atmosphere, and
wherein the second motor assembly is configured to, when the second motor assembly receives the signal:
limit use of the first motor command to operate the valve by the first motor assembly, and
limit use of the second motor command to operate the valve.

9. The system of any of claims 1 to 8,
wherein the valve is a first valve, the first motor assembly is a motor assembly MA-1, the second motor assembly is a motor assembly MB-1, the manual motor assembly is a motor assembly MAN-1, the first motor command is a first C1 motor command, and the second motor command is a first C2 motor command, and
wherein the system further comprises:
the first controller and the second controller;
a second valve configured to fluidically couple the compartment and the external atmosphere;
a motor assembly MA-2 configured to operate the second valve;
a motor assembly MB-2 configured to operate the second valve; and
a motor assembly MAN-2 configured to operate the second valve,
wherein the first controller is configured to issue a second C1 motor command to cause motor assembly MA-2 to operate the second valve when the first controller issues the first C1 motor command to the first valve,
wherein the motor assembly MB-2 is configured to receive a second C2 motor command from the second controller to operate the second valve,
wherein the pressure control system is configured to limit the motor assembly MB-2 from operating the second valve when the motor assembly MA-2 operates the second valve, and
wherein the pressure control system is configured to limit the motor assembly MA-2 and the motor assembly MB-2 from operating the second valve when the motor assembly MAN-2 operates the second valve.

10. The system of claim 9, further comprising a second sensor DP2 configured to provide a second signal to the motor assembly MB-2,
wherein the second signal is indicative of a second differential pressure between the compartment and the external atmosphere, and
wherein the motor assembly MB-2 is configured to, in response to the second differential pressure exceeding a second threshold:
cause operation of the second valve,
limit use of the second C1 motor command to operate the valve by the motor assembly MA-2, and
limit use of the second C2 motor command to operate the valve.

11. The system of claim 10, wherein the motor assembly MB-2 is configured to, in response to the second differential pressure exceeding the second threshold, limit operation of the second valve by the motor assembly MAN-2.

12. The system of claim 10 or 11, wherein the motor assembly MB-2 includes:
a second main microprocessor configured to receive the second signal from the second sensor DP2 and issue a third alerting signal in response to the second signal exceeding the second threshold;
a second sensor microprocessor configured to receive the second signal from the second sensor DP2 and issue a fourth alerting signal in response to the second signal exceeding the second threshold; and
a second comparative device configured to receive the third alerting signal and the fourth alerting signal, wherein the second comparative device is configured to, in response to receiving the third alerting signal and the fourth alerting signal, cause the motor assembly MB-2 to operate the second valve.

13. The system of any of claims 9 to 12, further comprising the second controller,
wherein the motor assembly MB-1 is configured to receive a first C2 motor command from the second controller to operate the first valve,
wherein the pressure control system is configured to limit the motor assembly MA-1 from operating the first valve when the second controller issues the first C2 motor command to the motor assembly MB-1, and
wherein the pressure control system is configured to limit the motor assembly MA-2 from operating the second valve when the second controller issues the second C2 motor command to the motor assembly MB-2.

14. The system of claim 13,
wherein the motor assembly MA-1 is configured to receive the first C1 motor command from the first controller to operate the first valve when the motor MAN-2 operates the second valve,
wherein the motor assembly MB-1 is configured to receive the first C2 motor command from the second controller to operate the first valve when the motor assembly MAN-2 operates the second valve,
wherein the motor assembly MA-2 is configured to receive the second C1 motor command from the first controller to operate the second valve when the motor assembly MAN-1 operates the first valve, and
wherein the motor assembly MB-2 is configured to receive the second C2 motor command from the second controller to operate the second valve when the motor assembly MAN-1 operates the first valve.

15. A method, comprising:
operating, using a pressure control system, a valve using one of a first motor assembly, a second motor assembly, or a manual motor assembly, wherein the valve is configured to fluidically couple a compartment of a vehicle and an external atmosphere surrounding the vehicle, wherein the first motor assembly is configured to operate the valve when the first motor assembly receives a first motor command from a first controller, wherein the second motor assembly is configured to operate the valve when the second motor assembly receives a second motor command from a second controller;
limiting, using the pressure control system, the second motor assembly from operating the valve when the first motor assembly operates the valve and limiting, using the pressure control system, the first motor assembly from operating the valve when the second motor assembly operates the valve;
limiting, using the pressure control system, the first motor assembly and the second motor assembly from operating the valve when the manual motor assembly operates the valve; and
limiting, using a sensor, use of the first motor command to operate the valve and use of the second motor command to operate the valve when the sensor provides a signal to the second motor assembly, wherein the sensor is configured to provide the signal when a differential pressure between the compartment and the external atmosphere exceeds a threshold.

## Amended claims

### Amended claims in accordance with Rule 137(2) EPC.

1. A pressure control system (100) for a compartment (112) of a vehicle (102), the system comprising:
a valve (OFV-1) configured to fluidically couple the compartment (122) and an external atmosphere (EO) surrounding the vehicle (102);
a first motor assembly (MA-1) configured to operate the valve (OFV-1);
a second motor assembly (MB-1) configured to operate the valve (OFV-1); and
a manual motor assembly (MAN-1) configured to operate the valve (OFV-1),
wherein the first motor assembly (MA-1) is configured to receive a first motor command (162) from a first controller (C1) to operate the valve (OFV-1),
wherein the second motor assembly (MB-1) is configured to receive a second motor command (166) from a second controller (C2) to operate the valve (OFV-1),
wherein the pressure control system (100) is configured to limit the second motor assembly (MB-1) from operating the valve (OFV-1) when the first motor assembly (MA-1) operates the valve (OFV-1), and
wherein the pressure control system (100) is configured to limit the first motor assembly (MA-1) from operating the valve (OFV-1) and limit the second motor assembly (MB-1) from operating the valve (OFV-1) when the manual motor assembly (MAN-1) operates the valve (OFV-1); and
a sensor (DP1) configured to provide a signal (264) to the second motor assembly (MB-1) to cause operation of the valve (OFV-1) using a backup motor command.

2. The system (100) of claim 1,
wherein the first motor assembly (MA-1) includes a first motor controller (172) and a first motor (174), the first motor controller (172) configured to cause operation of the first motor (174) to operate the valve (OFV-1) using the first motor command (162),
wherein the second motor assembly (MB-1) includes a second motor controller (176) and a second motor (178), the second motor controller (176) configured to cause operation of the second motor (178) to operate the valve (OFV-1) using the second motor command (166),
wherein the first motor controller (172) is configured to limit use of the first motor (174) to operate the valve (OFV-1) when the second motor controller (176) uses the second motor (178) to operate the valve (OFV-1), and
wherein the second motor controller (176) is configured to limit use of the second motor (178) to operate the valve (OFV-1) when the first motor controller (172) uses the first motor (174) to operate the valve (OFV-1).

3. The system (100) of claim 1 or 2, further comprising an actuator (148) configured to cause the manual motor assembly (MAN-1) to operate the valve (OFV-1), wherein the actuator (148) is configured to be operable by an operator of the vehicle (102).

4. The system (100) of any of claims 1 to 3, wherein the second motor assembly (MB-1) is configured to, in response to the differential pressure exceeding the threshold, limit operation of the valve (OFV-1) by the manual motor assembly (MAN-1).

5. The system (100) of any of claims 1 to 4, wherein the second motor assembly (MB-1) includes:
a main microprocessor (246) configured to receive the signal (264) from the sensor (DP1) and issue a first alerting signal (272) in response to the signal (264) exceeding the threshold;
a sensor microprocessor (266) configured to receive the signal (264) from the sensor (DP1) and issue a second alerting signal (268) in response to the signal (264) exceeding the threshold; and
a comparative device (270) configured to receive the first alerting signal (272) and the second alerting signal (268), wherein the comparative device (270) is configured to, in response to receiving the first alerting signal (272) and the second alerting signal (268), cause the second motor assembly (MB-1) to operate the valve (OFV-1).

6. The system (100) of any of claims 1 to 5, further comprising the first controller (C1) and the second controller (C2),
wherein the first controller (C1) is configured to cause operation of the valve (OFV-1) in a first primary configuration and configured to limit operation of the valve (OFV-1) in a first standby configuration,
wherein the second controller (C2) is configured to cause operation of the valve (OFV-1) in a second primary configuration and configured to limit operation of the valve (OFV-1) in a second standby configuration,
wherein the second controller (C2) is configured to establish the second standby configuration when the first controller (C1) is in the first primary configuration, and
wherein the first controller (C1) is configured to establish the first standby configuration when the second controller (C2) is in the second primary configuration.

7. The system (100) of any of claims 1 to 6, further comprising the first controller (C1) and the second controller (C2),
wherein the first controller (C1) is configured to communicate a first fault signal to the second controller (C2) and the second controller (C2) is configured to communicate a second fault signal to the first controller (C1),
wherein the second motor assembly (MB-1) is configured to cause operation of the valve (OFV-1) when the second controller (C2) receives the first fault signal, and
wherein the first motor assembly (MA-1) is configured to cause operation of the valve (OFV-1) when the first controller (C1) receives the second fault signal.

8. The system (100) of any of claims 1 to 7,
wherein the signal (264) of the sensor (DP1) is indicative of a differential pressure between the compartment (112) and the external atmosphere (EO), and
wherein the second motor assembly (MB-1) is configured to, when the second motor assembly (MB-1) receives the signal (264):
limit use of the first motor command (162) to operate the valve (OFV-1) by the first motor assembly (MA-1), and
limit use of the second motor command (166) to operate the valve (OFV-1).

9. The system (100) of any of claims 1 to 8,
wherein the valve (OFV-1) is a first valve (OFV-1), the first motor assembly is a motor assembly MA-1, the second motor assembly is a motor assembly MB-1, the manual motor assembly is a motor assembly MAN-1, the first motor command is a first C1 motor command (162), and the second motor command is a first C2 motor command (166), and
wherein the system (100) further comprises:
the first controller (C1) and the second controller (C2);
a second valve (OFV-2) configured to fluidically couple the compartment (112) and the external atmosphere (EO);
a motor assembly MA-2 configured to operate the second valve (OFV-2);
a motor assembly MB-2 configured to operate the second valve (OFV-2); and
a motor assembly MAN-2 configured to operate the second valve (OFV-2),
wherein the first controller (C1) is configured to issue a second C1 motor command (164) to cause motor assembly MA-2 to operate the second valve (OFV-2) when the first controller (C1) issues the first C1 motor command (162) to the first valve (OFV-1),
wherein the motor assembly MB-2 is configured to receive a second C2 motor command (168) from the second controller (C2) to operate the second valve (OFV-2),
wherein the pressure control system (100) is configured to limit the motor assembly MB-2 from operating the second valve (OFV-2) when the motor assembly MA-2 operates the second valve (OFV-2), and
wherein the pressure control system (100) is configured to limit the motor assembly MA-2 and the motor assembly MB-2 from operating the second valve (OFV-2) when the motor assembly MAN-2 operates the second valve (OFV-2).

10. The system (100) of claim 9, further comprising a second sensor DP2 configured to provide a second signal to the motor assembly MB-2,
wherein the second signal is indicative of a second differential pressure between the compartment (112) and the external atmosphere (EO), and
wherein the motor assembly MB-2 is configured to, in response to the second differential pressure exceeding a second threshold:
cause operation of the second valve (OFV-2),
limit use of the second C1 motor command (164) to operate the valve by the motor assembly MA-2, and
limit use of the second C2 motor command (168) to operate the valve.

11. The system (100) of claim 10, wherein the motor assembly MB-2 is configured to, in response to the second differential pressure exceeding the second threshold, limit operation of the second valve (OFV-2) by the motor assembly MAN-2.

12. The system (100) of claim 10 or 11, wherein the motor assembly MB-2 includes:
a second main microprocessor configured to receive the second signal from the second sensor DP2 and issue a third alerting signal in response to the second signal exceeding the second threshold;
a second sensor microprocessor configured to receive the second signal from the second sensor DP2 and issue a fourth alerting signal in response to the second signal exceeding the second threshold; and
a second comparative device configured to receive the third alerting signal and the fourth alerting signal, wherein the second comparative device is configured to, in response to receiving the third alerting signal and the fourth alerting signal, cause the motor assembly MB-2 to operate the second valve (OFV-2).

13. The system (100) of any of claims 9 to 12, further comprising the second controller (C2),
wherein the motor assembly MB-1 is configured to receive a first C2 motor command (166) from the second controller (C2) to operate the first valve (OFV-1),
wherein the pressure control system (100) is configured to limit the motor assembly MA-1 from operating the first valve (OFV-1) when the second controller (C2) issues the first C2 motor command (166) to the motor assembly MB-1, and
wherein the pressure control system (100) is configured to limit the motor assembly MA-2 from operating the second valve (OFV-2) when the second controller (C2) issues the second C2 motor command (168) to the motor assembly MB-2.

14. The system (100) of claim 13,
wherein the motor assembly MA-1 is configured to receive the first C1 motor command (162) from the first controller (C1) to operate the first valve (OFV-1) when the motor MAN-2 operates the second valve (OFV-2),
wherein the motor assembly MB-1 is configured to receive the first C2 motor command (166) from the second controller (C2) to operate the first valve (OFV-1) when the motor assembly MAN-2 operates the second valve (OFv-2),
wherein the motor assembly MA-2 is configured to receive the second C1 motor command (164) from the first controller (C1) to operate the second valve (OFV-2) when the motor assembly MAN-1 operates the first valve (OFV-1), and
wherein the motor assembly MB-2 is configured to receive the second C2 motor command (168) from the second controller (C2) to operate the second valve (OFV-2) when the motor assembly MAN-1 operates the first valve (OFV-1).

15. A method, comprising:
operating, using a pressure control system (100), a valve using one of a first motor assembly (MA-1), a second motor assembly (MB-1), or a manual motor assembly (MAN-1), wherein the valve is configured to fluidically couple a compartment (112) of a vehicle (102) and an external atmosphere (EO) surrounding the vehicle (102), wherein the first motor assembly (MA-1) is configured to operate the valve when the first motor assembly (MA-1) receives a first motor command (162) from a first controller (C1), wherein the second motor assembly (MB-1) is configured to operate the valve when the second motor assembly (MB-1) receives a second motor command (166) from a second controller (C2);
limiting, using the pressure control system (100), the second motor assembly (MB-1) from operating the valve (OFV-1) when the first motor assembly (MA-1) operates the valve (OFV-1) and limiting, using the pressure control system (100), the first motor assembly (MA-1) from operating the valve (OFV-1) when the second motor assembly (MB-1) operates the valve (OFV-1);
limiting, using the pressure control system (100), the first motor assembly (MA-1) and the second motor assembly (MB-1) from operating the valve when the manual motor assembly (MAN-1) operates the valve; and
limiting, using a sensor (DP1), use of the first motor command (162) to operate the valve (OFV-1) and use of the second motor command (166) to operate the valve (OFV-1) when the sensor (DP1) provides a signal (264) to the second motor assembly (MB-1), wherein the sensor (DP1) is configured to provide the signal (264) when a differential pressure between the compartment (112) and the external atmosphere (EO) exceeds a threshold.
